# EUROPÄISCHE PATENTSCHRIFT

(11) **EP 4 136 506 B1**
(45) Veröffentlichungstag und Bekanntmachung des Hinweises auf die Patenterteilung: **09.12.2026**
(21) Anmeldenummer: 21718851.5
(22) Anmeldetag: 13.04.2021
(51) Int. Cl.: G02F 1/35, H01S 3/00

(54) **VORRICHTUNG ZUR SPEKTRALEN VERBREITERUNG VON LASERPULSEN UND OPTISCHES SYSTEM**
APPARATUS FOR THE SPECTRAL BROADENING OF LASER PULSES AND OPTICAL SYSTEM
DISPOSITIF DE TRAITEMENT SPECTRAL D'IMPULSIONS LASER ET SYSTÈME OPTIQUE

(30) Priorität: 16.04.2020 DE 102020204808
(43) Veröffentlichungstag der Anmeldung: 22.02.2023
(73) Patentinhaber: TRUMPF Laser SE, 78713 Schramberg (DE)
(72) Erfinder: BAUER, Dominik, 78628 Rottweil (DE); BRONS, Jonathan, 78727 Oberndorf (DE); KILLI, Alexander, 78647 Trossingen (DE)
(74) Vertreter: Trumpf Patentabteilung
(86) Internationale Anmeldenummer: PCT/EP2021/059532
(87) Internationale Veröffentlichungsnummer: WO 2021/209434

(56) Entgegenhaltungen:
- US-A1- 2017 125 964
- US-A1- 2019 173 257
- PATRICK L KRAMER ET AL: "Enabling high repetition rate nonlinear THz science with a kilowatt-class sub-100 fs laser source", ARXIV.ORG, CORNELL UNIVERSITY LIBRARY, 201 OLIN LIBRARY CORNELL UNIVERSITY ITHACA, NY 14853, 13 February 2020 (2020-02-13), XP081598671

## Beschreibung

Die vorliegende Erfindung betrifft eine Vorrichtung zur spektralen Verbreiterung von Laserpulsen sowie ein optisches System mit einer solchen Vorrichtung.

Für bestimmte Anwendungen, beispielsweise zur Erzeugung von Röntgen- bzw. EUV-Strahlung, ist es günstig, ultrakurze Laserpulse mit Pulsdauern in der Größenordnung von ca. 10 fs bis ca. 100 fs zu erzeugen. Auch in der Materialbearbeitung ist es günstig, Pulsdauern kleiner 400 fs zu erzeugen, d.h. Pulsdauern, die kleiner sind als die üblicherweise mit Hochleistungs-Laserquellen bzw. Hochleistungs(scheiben)-Laserverstärkern erreichbaren Pulsdauern in der Größenordnung von ca. 800 fs. Die hohe Leistung der Laserpulse kann insbesondere auch mit Hilfe von hochleistungstauglichen Verstärkermaterialien, z.B. mit Hilfe von Ytterbium-dotierten Materialien, erzeugt werden.

Zur Verkürzung der Pulsdauer von Laserpulsen ist es bekannt, eine nichtlineare spektrale Verbreiterung der Laserpulse vorzunehmen und die Laserpulse nach der spektralen Verbreiterung zeitlich zu komprimieren, wozu beispielsweise dispersive optische Elemente verwendet werden können. Auf diese Weise kann die Pulsdauer der Laserpulse typischerweise um einen Faktor 10-20 verkürzt werden, wobei die Puls- und Strahlqualität weitgehend erhalten bleibt.

Für die spektrale Verbreiterung von Laserpulsen kann ein Medium mit nichtlinearen optischen Eigenschaften verwendet werden, in dem die Laserpulse durch Selbstphasenmodulation eine nichtlineare Phase erhalten und somit neue Frequenzen erzeugt werden. Ursache der Selbstphasenmodulation bzw. der nichtlinearen Phasenverschiebung ist der Kerr-Effekt, d.h. eine nichtlineare Brechungsindexänderung, die von der Intensität der Laserstrahlung abhängig ist, die durch das nichtlineare optische Medium hindurchtritt.

Für die Erzeugung der Selbstphasenmodulation können verschiedene nichtlineare optische Medien verwendet werden. Beispielsweise können optische Fasern oder optische Hohlkern-Fasern zu diesem Zweck verwendet werden. Eine andere Möglichkeit besteht darin, dass der Laserstrahl ein nichtlineares Festkörpermedium (Bulk-Material) durchläuft. Beispielsweise kann der Laserstrahl in diesem Fall ein durchsichtiges Plättchen durchlaufen, das ein nichtlineares Material mit einem nichtlinearen Brechungsindex aufweist, z.B. SiO₂, wie dies in der US2011/0299152A1 beschrieben ist.

Eine weitere Möglichkeit zur Erzeugung der Selbstphasenmodulation besteht darin, eine Multipass-Zelle (Herriott-Zelle) zu verwenden, die mit einem Gas gefüllt ist, welches als nichtlineares optisches Medium dient. In dem Artikel "Nonlinear pulse compression based on a gas-filled multipass cell", L. Lavenu et al., Optics Letters, Vol. 43, No. 10, 2018, wird beispielsweise Argon als nichtlineares optisches Medium in einer gasgefüllten Multipass-Zelle verwendet.

In der DE 10 2014 007 159 A1 ist ebenfalls eine Multipass-Zelle beschrieben, welche ein nichtlineares optisches Medium in Form eines gasförmigen Mediums oder eines Festkörpermediums aufweist. Die Multipass-Zelle weist mindestens zwei Spiegelelemente auf, an denen Laserpulse, welche die Zelle durchlaufen, mehrfach reflektiert werden. Das nichtlineare Festkörpermedium kann als optisches Element zwischen den Spiegelelementen angeordnet sein. Als nichtlineares Festkörpermedium kann auch ein Substrat eines Spiegelelements dienen, an dessen Rückseite eine hochreflektierende Beschichtung aufgebracht ist. An Stelle des Spiegelsubstrats kann auch ein auf die Vorderseite des Spiegelelements aufgebrachtes dünnes optisches Element als nichtlineares optisches Festkörpermedium eingesetzt werden. Das dünne nichtlineare optische Element kann angesprengt, aufgeklebt, epitaktisch aufgebracht oder in anderer Weise an dem Spiegelelement befestigt sein.

Die zur Erzeugung der Selbstphasenmodulation verwendete Anordnung beeinflusst die Strahlkaustik bzw. die Strahlführung und somit die resultierende Strahlqualität. Wie dies in der DE 10 2014 007 159 A1 beschrieben ist, ist der Gouy-Parameter ψ der optischen Anordnung, welcher die Gouy-Phase bzw. die Gouy-Phasendifferenz bezeichnet, die eine transversale Eigenmode (Grundmode) bei einem Durchlauf durch die optische Anordnung aufsammelt, für eine freie Propagation idealerweise so zu wählen, dass sie weder am Rand noch in der Mitte des Stabilitätsbereichs eines äquivalenten Resonators liegt, d.h.: 0 < ψ < π. Für eine gute Komprimierbarkeit der Laserpulse ist es zudem günstig, wenn die Nichtlinearität angepasst auf die Propagation möglichst in kleinen Dosen eingebracht werden kann.

Für hohe mittlere Leistungen und moderate Pulsenergien im µJ-Bereich bis zum einstelligen mJ-Bereich werden häufig gasgefüllte oder rückseitenbeschichtete Herriott-Zellen verwendet. Für Pulsenergien im 100 mJ-Bereich und darüber werden gasgefüllte Herriott-Zellen typischerweise mit großen Fokusdurchmessern genutzt. Dies hat zur Folge, dass die Herriott-Zellen vergleichsweise lang sind (z.B. eine Länge von ca. 10 m bei einer Pulsenergie von 200 mJ und einer zu komprimierenden Pulsdauer von 500 fs bei Verwendung von Helium als Füllgas aufweisen) und dass die monolithischen Spiegelelemente große Durchmesser von 4 Zoll und mehr benötigen.

Patrick L. Kramer et al. beschreiben in dem Artikel "Enabling high repetition rate nonlinear THz science with a kilowatt-class sub-100 fs laser source", veröffentlicht am 13. Februar 2020 auf arXiv (arXiv:2002.05286v1), eine Hochleistungs-Laseranordnung, bei der Laserpulse in einer gasgefüllten Multipass- bzw. Herriott-Zelle durch Selbstphasenmodulation in Argongas spektral verbreitert und anschließend komprimiert werden, um als Pumpquelle für die Erzeugung intensiver THz-Strahlung zu dienen. Hierzu werden einzelne Spiegel ("single mirrors") in einer kreisförmigen Anordnung verwendet, um den Strahlengang einer klassischen Herriott-Zelle nachzubilden. Die Spiegelanordnungen befinden sich innerhalb zweier einander gegenüberliegender 6-Wege-Würfel. US 2017/125964 A1 betrifft ein Verfahren und eine Vorrichtung zur spektralen Verbreiterung und anschließenden Kompression von Laserpulsen. Hierzu werden Laserpulse mehrfach zwischen zwei gegenüberliegenden Spiegeln geführt und wiederholt durch ein nichtlineares optisches Medium geleitet, sodass durch Selbstphasenmodulation eine spektrale Verbreiterung erzielt wird. Der Schwerpunkt der Druckschrift liegt auf der optischen Auslegung der Multipass-Anordnung, insbesondere der Ausnutzung der Gouy-Phase zur Optimierung der spektralen Verbreiterung. Als nichtlineares Medium können sowohl Festkörper als auch Gase verwendet werden.

### Aufgabe der Erfindung

Der Erfindung liegt die Aufgabe zugrunde, eine Vorrichtung zur spektralen Verbreiterung von Laserpulsen mit hohen Pulsenergien mit einer kompakten Bauform bereitzustellen. Der Erfindung liegt auch die Aufgabe zugrunde, ein optisches System mit einer solchen Vorrichtung bereitzustellen.

### Gegenstand der Erfindung

Diese Aufgabe wird gelöst durch eine Vorrichtung zur spektralen Verbreiterung von Laserpulsen, umfassend: eine Mehrzahl von Spiegelelementen, an denen jeweils eine Spiegelfläche zur Reflexion der Laserpulse gebildet ist, wobei die Mehrzahl von Spiegelelementen an einem Grundkörper befestigt ist, sowie mindestens ein bevorzugt plattenförmiges, insbesondere scheibenförmiges nichtlineares optisches Festkörpermedium und/oder ein gasförmiges nichtlineares optisches Medium zum Durchtritt der Laserpulse für die Erzeugung einer nichtlinearen Phase durch Selbstphasenmodulation. Das nichtlineare optische Festkörpermedium kann von dem Grundkörper bzw. von den Spiegelelementen beabstandet sein oder an der jeweiligen Spiegelfläche angebracht bzw. befestigt sein. Die Laserpulse propagieren mindestens einmal durch das nichtlineare Festkörpermedium und/oder durch das gasförmige nichtlineare optische Medium. Das gasförmige nichtlineare optische Medium befindet sich typischerweise in der Umgebung der Spiegelelemente bzw. der Spiegelflächen bzw. diese sind in dem gasförmigen nichtlinearen optischen Medium angeordnet.

Bei der erfindungsgemäßen Vorrichtung wird ausgenutzt, dass bei der spektralen Verbreiterung der Laserpulse kein monolithisches Spiegelelement benötigt wird, wie dies beispielsweise in der eingangs zitierten DE 10 2014 007 159 A1 beschrieben ist: Es ist vielmehr ausreichend, eine Mehrzahl von vergleichsweise kleinen Spiegelelementen für die Reflexion der Laserpulse zu verwenden. Die Herstellung bzw. die (End-)Bearbeitung der Spiegelflächen dieser Spiegelelemente ist deutlich weniger aufwändig und damit weniger teuer als dies bei monolithischen Spiegelelementen mit vergleichsweise großem Durchmesser der Fall ist. Auch kann bei der Beschädigung eines jeweiligen Spiegelelements nur das entsprechende Spiegelelement ausgetauscht werden, während bei der Beschädigung der reflektierenden Beschichtung eines großen monolithischen Spiegels der gesamte Spiegel ausgetauscht werden muss.

Bei der Nutzung einer Vielzahl von Einzelspiegeln unter Verwendung von separaten Optomechaniken zur Ausrichtung der einzelnen Spiegelelemente kann die Vorrichtung durch Langzeitdrifts, z.B. durch thermische Zyklen, dejustiert werden. Dies ist insbesondere bei den angestrebten hohen Durchschnittslaserleistungen der Eingangslaserstrahlung von z.B. mehr als 50 W der Fall, bei denen eine Dejustage der Vorrichtung nur schwer verhindert werden kann.

Durch die Befestigung an dem in der Regel einteiligen oder monolithisch gefügten Grundkörper - typischerweise durch eine feste bzw. dauerhafte Verbindung, z.B. durch direktes Fügen (Bonden), Schweißen oder Kleben - können die Dejustage-Freiheitsgrade auf ein Minimum reduziert werden, so dass eine Dejustage der Spiegelelemente während des Betriebs der Vorrichtung praktisch ausgeschlossen werden kann.

Bei dem nichtlinearen optischen Festkörpermedium handelt es sich in der Regel nicht um ein laseraktives Festkörpermedium, das zum Verstärken der Laserpulse geeignet ist (Verstärkermaterial). Ein solches Verstärkermaterial, insbesondere in Form von Ytterbium-dotiertem YAG, kann als Spektralfilter wirken und der spektralen Verbreiterung der Laserpulse entgegenwirken, so dass die angestrebte Vergrößerung der spektralen Bandbreite nicht erreicht werden kann oder die Pulse im Nachgang zeitlich nicht gut komprimiert werden können. Die Vorrichtung zur spektralen Verbreiterung der Laserpulse ist typischerweise ausgebildet, die spektrale Bandbreite der in die Vorrichtung eingestrahlten Laserpulse mindestens zu verdoppeln.

Bei einer Ausführungsform ist an einer Oberfläche mindestens eines Spiegelelements, an der die Spiegelfläche gebildet ist, ein jeweiliges nichtlineares optisches Festkörpermedium befestigt. Die nichtlinearen optischen Festkörpermedien sind typischerweise in Form von Plättchen ausgebildet. Für jede Konfiguration ist es erforderlich, die Dicke des Plättchens anzupassen. Für hohe Pulsenergien führt dies dazu, dass die Plättchen sehr dünn sein müssen. Eine geringe Dicke des nichtlinearen optischen Festkörpermediums ist bei Verwendung von vergleichsweise kleinen Spiegelelementen in der Regel unproblematisch, bei der Verwendung eines großen, rückseitenbeschichteten monolithischen Spiegelelements jedoch schwierig zu realisieren.

Zum Erhalt der Formtreue wird ein jeweiliges plattenförmiges, nichtlineares optisches Festkörpermedium an einer Oberfläche eines jeweiligen Spiegelelements befestigt. Die Geometrie der Oberfläche des Spiegelelements, an welcher das Festkörpermedium befestigt wird, stimmt hierbei typischerweise mit der Geometrie der Rückseite des plattenförmigen Festkörpermediums überein, so dass die Oberfläche des Spiegelelements und die Rückseite des plattenförmigen Festkörpermediums flächig aneinander anliegen. Die Spiegelfläche des Spiegelelements bildet typischerweise die Grenzfläche zwischen dem nichtlinearen optischen Festkörpermedium und der Oberfläche, an welcher dieses an dem Spiegelelement befestigt ist.

Bei der Befestigung des nichtlinearen optischen Festkörpermediums an dem Spiegelelement kann es sich um eine feste, dauerhafte Befestigung handeln, die beispielsweise unter Verwendung eines Fügemittels, z.B. eines Klebers, hergestellt wird. Das plattenförmige nichtlineare Festkörpermedium kann ggf. epitaktisch oder amorph auf die Oberfläche aufgebracht werden. Auch eine lösbare Befestigung, z.B. durch Ansprengen an die Oberfläche des Spiegelelements, ist grundsätzlich möglich. Eine lösbare Verbindung ist günstig, da dieses es ermöglicht, die Stärke der Nichtlinearität auf einfache Weise anzupassen, da plattenförmige nichtlineare optische Festkörpermedien mit unterschiedlicher Dicke und/oder aus unterschiedlichen Materialien an dem Spiegelelement befestigt werden können. Auch bei einer dauerhaften Befestigung kann eine Feinanpassung der Dicke bzw. des Materials des nichtlinearen optischen Festkörpermediums vorgenommen werden, um eine optimierte spektrale Pulsverbreiterung zu erzeugen.

Bei einer bevorzugten Ausführungsform umfasst die Vorrichtung eine Mehrzahl von weiteren Spiegelelementen mit weiteren Spiegelflächen, wobei die Mehrzahl von weiteren Spiegelelementen an einem weiteren Grundkörper befestigt ist, und wobei der Grundkörper und der weitere Grundkörper zur Bildung einer Multipass-Zelle in einem vorgegebenen Abstand voneinander angeordnet sind. Bei dieser Ausführungsform wird ausgenutzt, dass - wie dem Fachmann geläufig ist - die Laserpulse in der Multipass-Zelle bei einer geeigneten Ausrichtung der eingestrahlten Laserpulse bzw. bei einer geeigneten Dimensionierung der Multipass-Zelle in der Regel nur an vorgegebenen Positionen entlang einer Ellipse, eines Kreises oder ggf. einer geringfügig von einem Kreis abweichenden Kontur um die optische Achse der Multipass-Zelle herum auftreffen und von dort reflektiert werden. Wird an diesen Positionen, die in Umfangsrichtung typischerweise äquidistant angeordnet sind, jeweils ein Spiegelelement positioniert, können an Stelle der typischerweise monolithischen Spiegelelemente, welche die Multipass-Zelle üblicherweise begrenzen, eine Mehrzahl vergleichsweise kleinen Spiegelelementen zur Reflexion der Laserpulse verwendet werden.

Durch die Verwendung eines nichtlinearen optischen Festkörpermediums im großen Strahl an Stelle eines gasförmigen nichtlinearen optischen Mediums kann der Druck in der Multipass-Zelle reduziert werden, wodurch einer Ionisierung des in der Multipass-Zelle vorhandenen Gases im Fokus der Kaustik durch hohe Pulsenergien entgegengewirkt werden kann. Auf diese Weise können vergleichsweise kleine Fokusdurchmesser realisiert werden, so dass die Multipass-Zelle in einer kompakteren Bauform realisiert werden kann.

Die Multipass-Zelle kann aber auch in einer vergleichsweise kompakten Bauform realisiert werden, wenn die spektrale Verbreiterung der Laserpulse allein durch ein gasförmiges nichtlineares optisches Medium erzeugt wird, d.h. wenn die Vorrichtung kein nichtlineares optisches Festkörpermedium aufweist. Es versteht sich, dass die Vorrichtung auch eine Kombination aus einem gasförmigen nichtlinearen optischen Medium und einem nichtlinearen optischen Festkörpermedium aufweisen kann, um die spektrale Verbreiterung zu bewirken.

Bei einer Weiterbildung dieser Ausführungsform ist an einer Oberfläche mindestens eines der weiteren Spiegelelemente, an der die weitere Spiegelfläche gebildet ist, ein nichtlineares optisches Festkörpermedium befestigt. Die Anzahl der Spiegelflächen bzw. der weiteren Spiegelflächen der Multipass-Zelle, an denen ein nichtlineares optisches Festkörpermedium befestigt ist, hängt von der nichtlinearen Phase ab, die mittels der Multipass-Zelle eingestellt werden soll. Grundsätzlich kann die Anzahl der Spiegelflächen bzw. der weiteren Spiegelflächen, an denen ein nichtlineares optisches Festkörpermedium befestigt ist, zwischen einer einzigen Spiegelfläche oder einer einzigen weiteren Spiegelfläche und allen Spiegelflächen und allen weiteren Spiegelflächen der Multipass-Zelle variieren. Bei der Verteilung der nichtlinearen optischen Festkörpermedien auf die Spiegelflächen und die weiteren Spiegelflächen der Multipass-Zelle hat es sich als günstig erwiesen, wenn die nichtlinearen optischen Festkörpermedien aperiodisch bzw. nichtperiodisch verteilt angeordnet sind.

Bei einer Ausführungsform sind in einem Strahlweg (Propagationsweg) der Laserpulse in der Vorrichtung, genauer gesagt in der Multipass-Zelle, mindestens drei nichtlineare optische Festkörpermedien angeordnet, wobei die Längen von Abschnitten des Strahlwegs zwischen jeweils zwei im Strahlweg benachbarten nichtlinearen optischen Festkörpermedien unterschiedlich groß sind. Bevorzugt nehmen die Längen der Abschnitte des Strahlwegs zwischen jeweils zwei im Strahlweg benachbarten nichtlinearen optischen Festkörpermedien mit zunehmender Länge des Strahlwegs der Laserpulse in der Vorrichtung (gemessen vom Eintritt der Laserpulse in die Vorrichtung) ab. Die mindestens drei nichtlinearen optischen Festkörpermedien sind typischerweise an mindestens drei unterschiedlichen Spiegelelementen bzw. weiteren Spiegelelementen befestigt.

Bei dieser Ausführungsform ist nicht an allen Spiegelelementen bzw. weiteren Spiegelelementen ein nichtlineares optisches Festkörpermedium befestigt. Durch die unterschiedlichen Längen der Abschnitte des Strahlwegs von im Strahlweg aufeinander folgenden nichtlinearen optischen Festkörpermedien kann die weiter oben beschriebene Aperiodizität erzeugt bzw. begünstigt werden. Es hat sich als günstig erwiesen, wenn die nichtlinearen Effekte mit der Länge der Propagation der Laserpulse in der Vorrichtung bzw. mit zunehmender Anzahl von Reflexionen an den Spiegelelementen und ggf. an den weiteren Spiegelelementen zunehmen. Eine solche Zunahme kann dadurch erreicht werden, dass die Längen der Abschnitte des Strahlwegs zwischen jeweils zwei benachbarten nichtlinearen optischen Festkörpermedien mit zunehmender Länge des Strahlwegs der Laserpulse in der Vorrichtung abnehmen.

Bei einer weiteren Ausführungsform sind an mindestens einer Oberfläche mindestens eines Spiegelelements und/oder an mindestens einer Oberfläche mindestens eines weiteren Spiegelelements mindestens zwei nichtlineare optische Festkörpermedien befestigt, deren Dicke unterschiedlich groß ist, wobei bevorzugt die Dicke der nichtlinearen optischen Festkörpermedien mit zunehmender Länge des Strahlwegs der Laserpulse in der Vorrichtung (gemessen vom Eintritt der Laserpulse in die Vorrichtung) zunehmen. Auch durch eine Variation der Dicke der nichtlinearen optischen Festkörpermedien kann eine Aperiodizität erzeugt bzw. begünstigt werden. Durch eine zunehmende Dicke der nichtlinearen optischen Festkörpermedien mit zunehmender Länge des Strahlwegs kann ebenfalls erreicht werden, dass die nichtlinearen Effekte in der Vorrichtung mit zunehmender Länge des Strahlwegs der Laserpulse zunehmen (unter der Voraussetzung, dass ein- und dasselbe Material für die nichtlinearen optischen Festkörpermedien verwendet wird).

Es versteht sich, dass Zunahme der Dicke der nichtlinearen optischen Festkörpermedien und die Zunahme der Dichte bzw. der Anzahl der nichtlinearen optischen Festkörpermedien mit zunehmender Länge des Strahlwegs in der Vorrichtung kombiniert werden können, um zu erreichen, dass die Stärke der nichtlinearen Effekte mit zunehmender Länge des Strahlwegs in der Vorrichtung zunimmt. Auch können zu diesem Zweck mehrere unterschiedliche nichtlineare optische Festkörpermedien verwendet werden, die sich in ihrem nichtlinearen Brechungsindex unterscheiden, wobei der nichtlineare Brechungsindex der jeweiligen nichtlinearen optischen Festkörpermedien mit zunehmender Länge des Strahlwegs in der Vorrichtung bzw. mit zunehmender Anzahl der Reflexionen an den Spiegelflächen bzw. an den weiteren Spiegelflächen zunimmt.

Es versteht sich, dass die Stärke der nichtlinearen Effekte, welche die Laserpulse beim Durchlaufen der Vorrichtung aufsammeln, nicht zwingend mit zunehmender Länge des Strahlwegs zunehmen muss.

Bei einer Ausführungsform ist die Spiegelfläche mindestens eines Spiegelelements durch eine (hoch-)reflektierende Beschichtung an einer dem Spiegelelement zugewandten Seite des plattenförmigen nichtlinearen optischen Festkörpermediums gebildet und/oder die Spiegelfläche mindestens eines weiteren Spiegelelements ist durch eine (hoch-)reflektierende Beschichtung an einer dem weiteren Spiegelelement zugewandten Seite des plattenförmigen nichtlinearen optischen Festkörpermediums gebildet. Wie weiter oben beschrieben wurde, wird das nichtlineare optische Festkörpermedium mit seiner Rückseite an der Oberfläche des Spiegelelements befestigt. Für den Fall, dass die Befestigung unter Verwendung eines Fügemittels erfolgt, ist es günstig, wenn die dem Spiegelelement zugewandte (Rück-)Seite des nichtlinearen optischen Festkörpermediums die Spiegelfläche bildet. Für den Fall, dass das nichtlineare optische Festkörpermedium an der Oberfläche des Spiegelelements angesprengt wird, kann die Oberfläche des Spiegelelements ggf. selbst eine reflektierende Beschichtung aufweisen, d.h. in diesem Fall dient die Oberfläche selbst als Spiegelfläche. An einer der jeweiligen Spiegelfläche bzw. weiteren Spiegelfläche abgewandten Seite kann das jeweilige plattenförmige nichtlineare optische Festkörpermedium eine Antireflex-Beschichtung oder eine antireflektierende Mikrostrukturierung aufweisen.

Bei einer weiteren Ausführungsform ist mindestens eine Spiegelfläche und/oder mindestens eine weitere Spiegelfläche konkav gekrümmt und bevorzugt ist das jeweilige plattenförmige nichtlineare optische Festkörpermedium ebenfalls konkav gekrümmt. Die konkave Krümmung wird bei einer Multipass-Zelle in der Regel benötigt, um eine Abbildung zu erzeugen bzw. um die Laserpulse an den weiter oben beschriebenen vorgegebenen Positionen entlang einer Ellipse bzw. eines Kreises zu reflektieren. Die Krümmung der Spiegelflächen ist an die physikalischen und nichtlinearen Materialeigenschaften des jeweiligen nichtlinearen optischen Festkörpermediums angepasst. Auch kann die zwischen Spiegelreflexionen aufgesammelte Gouy-Phase über den Verlauf der Propagation in der Multipass-Zelle durch unterschiedliche (typischerweise sphärische) Krümmungen der Spiegelflächen angepasst werden. Neben unterschiedlichen Krümmungen der Spiegelflächen können auch unterschiedliche Materialien für die nichtlinearen optischen Festkörpermedien der einzelnen Spiegelelemente verwendet werden, um die Gouy-Phase/die nichtlinearen Effekte über den Verlauf der Propagation durch die Multipass-Zelle anzupassen bzw. geeignet einzustellen. Insbesondere bei großen Krümmungsradien können einzelne Spiegelelemente bzw. deren Spiegelflächen plan ausgeführt sein (quasi-kollimierter Fall). Auch eine konvexe Krümmung der Spiegelflächen ist möglich (s.u.).

Bei einer weiteren Ausführungsform liegen die Mehrzahl von Spiegelflächen und die Mehrzahl von weiteren Spiegelflächen jeweils auf einer gemeinsamen Kugelfläche. Bei einer Multipass-Zelle in Form einer Herriott-Zelle sind die Spiegelflächen der beiden die Zelle begrenzenden Spiegelelemente jeweils sphärisch gekrümmt und weisen denselben Krümmungsradius auf. Die beiden Krümmungs-Mittelpunkte der sphärisch gekrümmten Spiegelflächen liegen auf einer gemeinsamen Geraden, welche die optische Achse (Mittelachse) der Multipass-Zelle bildet. Im hier beschriebenen Fall liegen die Spiegelflächen der Spiegelelemente bzw. der weiteren Spiegelelemente jeweils auf einer gemeinsamen Kugelfläche, genauer gesagt auf einem Kreis, der einen Schnitt durch die Kugelfläche bildet.

Bei einer weiteren Ausführungsform weisen die Mehrzahl von Spiegelflächen und die Mehrzahl von weiteren Spiegelflächen einen Krümmungsradius zwischen 1 m und 15 m auf. In diesem Fall wird die Multipass-Zelle ähnlich wie ein konzentrischer Resonator betrieben, der robust gegenüber Linsen im Fokus ist. Die Krümmungsradien der Spiegelflächen passen jeweils zum gewählten Abstand der beiden Grundkörper und damit zur Länge der Multipass-Zelle.

Bei einer alternativen Ausführungsform weisen die Mehrzahl von Spiegelflächen und die Mehrzahl von weiteren Spiegelflächen einen Krümmungsradius von weniger als 1000 m und von mehr als 10 m, bevorzugt mehr als 20 m, auf. In diesem Fall wird die Multipass-Zelle mit quasi-kollimierten Strahlen bzw. Laserpulsen im Regime eines Plan-Plan-Resonators betrieben.

Bei dem Betrieb der Multipass-Zelle mit quasi-kollimierten Strahlen liegt die Gesamtbrechkraft aller Spiegelelemente bevorzugt zwischen 5m und unendlich. Bei quasi-kollimierten Strahlen und somit kleinen Winkeln kann für die Berechnung der Gesamtbrechkraft die paraxiale Näherung verwendet werden.

Bei paraxialer Näherung setzt sich die Gesamtbrechkraft D_{Ges} additiv aus den Brechkräften Dᵢ der jeweiligen Spiegelelemente zusammen. Die Brechkraft Dᵢ des i-ten Spiegelelements ist hierbei gegeben durch Dᵢ = 1/fᵢ , wobei fᵢ die Brennweite des i-ten Spiegelelements bezeichnet. Für die jeweilige Brennweite fᵢ gilt: fᵢ = Rᵢ /2, wobei Rᵢ den Krümmungsradius des i-ten Spiegelelements bezeichnet.

Grundsätzlich kann - insbesondere bei quasi-kollimierten Strahlen - mindestens eine Spiegelfläche bzw. eine weitere Spiegelfläche eine konkave Krümmung aufweisen, mindestens eine Spiegelfläche bzw. eine weitere Spiegelfläche kann eine konvexe Krümmung aufweisen und/oder mindestens eine Spiegelfläche kann plan ausgebildet sein. Bei der Bestimmung der Gesamtbrechkraft werden die Krümmungsradien von konvex gekrümmten Spiegelflächen negativ und die Krümmungsradien von konkav gekrümmten Spiegelflächen positiv gezählt. Die Gesamtbrechkraft der konkaven und/oder konvexen Spiegelflächen ist so gewählt, dass sich die gewünschte Gesamtpropagation einstellt. Für das oben beschriebene Beispiel der quasi-kollimierten Propagation liegt die Gesamtbrechkraft typischerweise im oben angegebenen Wertebereich, d.h. zwischen ca. 5 m und unendlich.

Bei einer weiteren Ausführungsform beträgt ein Abstand zwischen dem Grundkörper und dem weiteren Grundkörper weniger als 1,5 m, bevorzugt weniger als 1 m. Wie weiter oben beschrieben wurde, kann die hier beschriebene Multipass-Zelle, die zur spektralen Verbreiterung von Laserpulsen mit Pulsenergien von mehr als ca. 100 mJ geeignet ist, mit einem vergleichsweise geringen Bauraum realisiert werden.

Bei einer weiteren Ausführungsform bildet die Mehrzahl von Spiegelelementen eine Umlenkeinrichtung, bei der die bevorzugt planen Spiegelflächen der Mehrzahl von Spiegelelementen derart ausgerichtet sind, dass die Laserpulse von einer jeweiligen Spiegelfläche über das scheibenförmige nichtlineare optische Festköpermedium oder über eine freiliegende, bevorzugt konkav gekrümmte Spiegelfläche eines Endspiegels zu einer anderen Spiegelfläche umgelenkt werden, wobei die Umlenkeinrichtung und das scheibenförmige nichtlineare optische Festkörpermedium oder die freiliegende Spiegelfläche zur Bildung einer Multipass-Zelle in einem vorgegebenen Abstand voneinander angeordnet sind. Unter einer Mehrzahl von Spiegelelementen werden mindestens zwei, in der Regel mehr als zwei Spiegelelemente verstanden. Typischerweise sind mindestens vier Spiegelelemente an dem Grundkörper befestigt.

Die Erfinder haben erkannt, dass beispielsweise die in der weiter oben zitierten US 2019/0173257 A1 beschriebene Umlenkeinrichtung, die dort in einem optischen Verstärker, genauer gesagt in einem Scheibenlaserverstärker, verwendet wird, auch zur spektralen Verbreiterung von Laserpulsen eingesetzt werden kann, wenn an Stelle des scheibenförmigen laseraktiven Mediums ein scheibenförmiges nichtlineares optisches Festkörpermedium verwendet wird. Zusätzlich zu dem scheibenförmigen laseraktiven Medium, das in einem vorgegebenen Abstand von dem Grundkörper der Umlenkeinrichtung angeordnet ist, kann ein nichtlineares optisches Festkörpermedium auch an einem oder an mehreren Umlenkspiegeln angebracht sein. Die Mehrzahl der Spiegelelemente der Umlenkeinrichtung weisen typischerweise plane Spiegelflächen auf, d.h. es erfolgt in der Regel keine Fokussierung der Laserpulse an der Umlenkeinrichtung. Die Verwendung der Umlenkeinrichtung ermöglicht daher, ohne Zwischenfoki zu arbeiten, so dass ggf. auf eine Evakuierung der optischen Anordnung verzichtet werden kann bzw. der Druck nicht so weit abgesenkt werden muss, wie dies bei einer Multipass-Zelle mit Zwischenfokus der Fall ist.

Das nichtlineare optische Festkörpermedium wird hierbei an derselben Stelle angeordnet, an der bei dem Laserverstärker das scheibenförmige laseraktive Medium angeordnet ist. Das nichtlineare optische Festkörpermedium kann auf einer Wärmesenke bzw. auf einem Träger oder auf einem Endspiegel angebracht bzw. befestigt sein.

Alternativ ist es möglich, dass die Multipass-Zelle einen Endspiegel aufweist, dessen Spiegelfläche von der Umlenkeinrichtung in dem vorgegebenen Abstand angeordnet ist. Der Endspiegel bzw. dessen Spiegelkörper weist in diesem Fall eine frei liegende Spiegelfläche auf, an der kein nichtlineares optisches Festkörpermedium befestigt ist. Der Endspiegel ist in diesem Fall typischerweise einteilig ausgebildet und weist nur die freiliegende Spiegelfläche und keine weiteren Spiegelflächen auf. Bei geeigneter Auslegung der Multipass-Zelle ist es möglich, den Endspiegel, genauer gesagt dessen Durchmesser, kleiner zu dimensionieren als dies bei einer herkömmlichen Herriott-Zelle der Fall ist. Der Grundkörper der Umlenkeinrichtung, an der die Mehrzahl von Spiegelelementen angebracht ist, weist demgegenüber in der Regel einen größeren Durchmesser auf.

Für den Fall, dass die Multipass-Zelle einen Endspiegel mit einer freiliegenden Spiegelfläche aufweist, wird die nichtlineare Phase in der Regel durch ein gasförmiges nichtlineares optisches Medium erzeugt, das zwischen den Endspiegel und die Umlenkeinrichtung eingebracht ist. Alternativ oder zusätzlich zur Verwendung des gasförmigen nichtlinearen optischen Mediums können an den Spiegelelementen der Umlenkeinrichtung weitere bevorzugt plattenförmige nichtlineare optische Festkörpermedien befestigt sein, welche die nichtlineare Phase oder einen Teil der nichtlinearen Phase erzeugen.

Sowohl für den Fall, dass die Multipass-Zelle eine freiliegende Spiegelfläche aufweist als auch für den Fall, dass die Multipass-Zelle mindestens ein nichtlineares optisches Festkörpermedium aufweist, ist der vorgegebene Abstand zu der Umlenkeinrichtung typischerweise so gewählt, dass näherungsweise eine gewünschte äquivalente Eigenmode in der Multipass-Zelle existieren kann (s.u.). Die typischerweise planen Spiegelflächen der Spiegelelemente der Umlenkeinrichtung sind in diesem Fall so ausgerichtet, dass eine gewünschte Anzahl von Umläufen, d.h. eine gewünschte Anzahl von Reflexionen in der Multipass-Zelle zwischen dem scheibenförmigen nichtlinearen Festkörpermedium bzw. der freiliegenden Spiegelfläche und der Umlenkeinrichtung realisiert wird. Die Ein- und Auskopplung der Laserpulse kann hierbei wahlweise über eine Öffnung in dem Grundkörper der Umlenkeinrichtung (z.B. ein Loch für ein fehlendes bzw. nicht besetztes Spiegelelement), über separate Ein- und/oder Auskoppelspiegel oder Kombinationen davon erfolgen.

Bei einer weiteren Ausführungsform umfasst die Vorrichtung ein Gehäuse, in dem die Multipass-Zelle angeordnet ist, sowie bevorzugt eine Pumpeinrichtung zum Evakuieren des Gehäuses. Bei der Pumpeinrichtung kann es sich beispielsweise um eine Vakuum-Pumpe handeln, die den Druck innerhalb des Gehäuses auf beispielsweise ca. 100 mbar bis ca. 0,1 mbar oder darunter reduziert. Insbesondere für den Fall, dass Laserpulse mit besonders hohe Pulsenergien spektral verbreitert werden sollen, ist zu beachten, dass das Gas bzw. die Gase, die in der Multipass-Zelle vorhanden sind, nicht ionisiert werden. Durch die Senkung des Drucks in der Multipass-Zelle kann der Ionisierung von in der Mutlipass-Zelle vorhandenen Gasen entgegengewirkt werden, so dass ein kleinerer minimaler Strahldurchmesser der Laserpulse in der Multipass-Zelle erzeugt werden kann, was ebenfalls zur Reduzierung der Baulänge der Multipass-Zelle beiträgt.

Grundsätzlich ist es auch bei der Verwendung einer Pumpeinrichtung zum Evakuieren des Gehäuses bzw. zur Erzeugung eines reduzierten Drucks in der Multipass-Zelle möglich, ein gasförmiges nichtlineares optisches Medium für die Erzeugung der nichtlinearen Phase zu verwenden. Insbesondere in diesem Fall kann aber auch auf eine Pumpeinrichtung verzichtet werden. Das Gehäuse der Multipass-Zelle ist gasdicht und weist typischerweise mindestens ein für die Wellenlänge(n) der Laserpulse transparentes Fenster auf, um die Laserpulse in die Multipass-Zelle einzukoppeln bzw. auszukoppeln. Für den Fall, dass eine Pumpeinrichtung zur Evakuierung des Gehäuses vorgesehen ist, muss das gasdichte Gehäuse zusätzlich auch druckdicht sein.

Bei einer weiteren Ausführungsform ist das gasförmige nichtlineare Medium in das Gehäuse eingebracht und ist bevorzugt ausgewählt aus der Gruppe umfassend: Edelgase (He, Ne, Ar, Kr, Xe) oder andere mehratomige Gase, z.B. Stickstoff, oder Gasgemische, insbesondere Luft. Im Sinne dieser Anmeldung wird unter einem gasförmigen nichtlinearen Medium auch eine Mischung aus zwei oder mehr Gasen verstanden, die in das Gehäuse eingebracht sind. Sowohl bei dieser Ausführungsform als auch für den Fall, dass kein gasförmiges nichtlineares Medium in das Gehäuse eingebracht ist, ist es günstig, die Gasatmosphäre in dem Gehäuse zu kontrollieren, d.h. sowohl die Art des bzw. der Gase in dem Gehäuse als auch den Druck des/der Gase in dem Gehäuse zu steuern oder ggf. zu regeln. Zu diesem Zweck kann die Vorrichtung mindestens ein steuerbares Einlassventil und/oder mindestens ein steuerbares Auslassventil aufweisen. Für die Regelung des Drucks kann die Vorrichtung zudem ein Druckmessgerät bzw. einen Drucksensor aufweisen.

Bei einer Ausführungsform weist das nichtlineare optische Festkörpermedium eine Spiegelfläche auf, die bevorzugt konkav gekrümmt ist (wenn in Strahlrichtung auf das nichtlineare optische Festkörpermedium geschaut wird). Das Festkörpermedium weist typischerweise eine Spiegelfläche in Form einer (hoch-)reflektierenden Beschichtung an einer der Umlenkeinrichtung abgewandten Seite auf, um die Laserpulse nach dem (doppelten) Durchlauf durch das Festkörpermedium zur Umlenkeinrichtung zurück zu reflektieren. An einer der Umlenkeinrichtung zugewandten Seite kann das nichtlineare optische Festkörpermedium eine Antireflex-Beschichtung oder eine antireflektierende Mikrostrukturierung aufweisen. Die Spiegelfläche ist typischerweise konkav gekrümmt, um der Divergenz durch Beugung entgegen zu wirken. Das Festköpermedium selbst weist in der Regel eine konstante Dicke auf und ist daher ebenfalls gekrümmt. Im Detail muss die Krümmung unter den Gesichtspunkten der Beugung und der zu erwarteten Kerrlinse angepasst werden. An Stelle des nichtlinearen optischen Festkörpermediums kann auch die Oberfläche, auf welche das Festkörpermedium aufgebracht ist, die (bevorzugt konkav gekrümmte) Spiegelfläche aufweisen. In diesem Fall weisen das nichtlineare optische Festkörpermedium und die Spiegelfläche die gleiche Krümmung auf.

Bei einer Ausführungsform sind die Spiegelelemente an dem Grundkörper in mindestens einem, bevorzugt in mehreren Kreisringen (oder in mehreren regelmäßigen Mehrecken, z.B. Sechsecken) konzentrisch um eine Mittelachse des Grundkörpers angeordnet, auf der typischerweise auch das Zentrum des scheibenförmigen nichtlinearen optischen Festkörpermediums liegt. Wie dies in der weiter oben zitierten US 2019/0173257 A1 beschrieben ist, wird durch eine regelmäßige Anordnung der Spiegelelemente zur Mittelachse ermöglicht, dass nur eine geringe Zahl von unterschiedlichen Typen von Spiegelelementen benötigt wird.

Bei einer weiteren Ausführungsform sind zur Erzeugung einer von einem Zentrum versetzten Auftreffposition der Laserpulse auf dem scheibenförmigen nichtlinearen optischen Festkörpermedium mindestens zwei der Spiegelelemente, zwischen denen die Laserpulse zu dem scheibenförmigen nichtlinearen optischen Festkörpermedium umgelenkt werden, in einem unterschiedlichen radialen Abstand zu einer Mittelachse des Grundkörpers angeordnet. Bei der in der US 2019/0173257 A1 beschriebenen Umlenkeinrichtung ist es das Ziel, die Laserscheibe mittig mit dem Laserstrahl zu treffen. Die Erfinder haben erkannt, dass es bei der hier beschriebenen Vorrichtung günstig ist, wenn das nichtlineare optische Festkörpermedium an unterschiedlichen Auftreffpositionen von den Laserpulsen getroffen wird, da auf diese Weise die Gefahr des Überschreitens der Zerstörschwelle in dem nichtlinearen optischen Festkörpermedium reduziert werden kann.

Um die Laserpulse an einer außermittigen Auftreffposition auf das nichtlineare optische Festkörpermedium auftreffen zu lassen, können die beiden Spiegelelemente, zwischen denen die Laserpulse auf das nichtlineare optische Festkörpermedium gelenkt werden, in unterschiedlichen (radialen) Abständen zur Mittelachse angeordnet werden. Werden mehrere Paare von Spiegelelementen auf diese Weise, d.h. in unterschiedlichen Abständen zur Mittelachse, angeordnet, können die Laserpulse an mehreren zum Zentrum versetzten Auftreffpositionen auf das nichtlineare optische Festkörpermedium auftreffen, wodurch das Risiko des Überschreitens der Zerstörschwelle weiter reduziert werden kann. Es versteht sich, dass nicht alle Spiegelelemente der Umlenkanordnung auf die weiter oben beschriebene Weise angeordnet sein müssen. Beispielsweise kann bei Spiegelelementen, die einen vergleichsweise geringen Abstand zur Mittelachse aufweisen, der radiale Abstand zur Mittelachse der jeweiligen Paare von Spiegelelementen konstant gehalten werden, so dass die Laserpulse an einer Auftreffposition im Zentrum des nichtlinearen optischen Festkörpermediums auftreffen. Auch in diesem Fall ist es möglich, durch eine Variation der Positionen der Spiegelelemente die sich überlagernden Auftreffpositionen auseinanderzuziehen, um das Überschreiten der Zerstörschwelle zu verhindern.

Bei einer Ausführungsform ist die Umlenkeinrichtung ausgebildet, die Laserpulse zwischen zwei aufeinanderfolgenden Umlenkungen zu dem nichtlinearen optischen Festkörpermedium oder der freiliegenden Spiegelfläche des Endspiegels zwischen mindestens zwei bevorzugt benachbarten Spiegelflächen umzulenken. Bei dieser Ausführungsform erfolgt typischerweise eine direkte Umlenkung der Laserpulse zwischen den Spiegelflächen von jeweils zwei der Mehrzahl von Spiegelelementen der Umlenkeinrichtung, bevor die Laserpulse erneut auf das nichtlineare optische Festkörpermedium eingestrahlt werden. Es sind daher in der Regel keine weiteren optischen Elemente im Strahlengang zwischen den Spiegelflächen von zwei typischerweise in Umfangsrichtung benachbarten Spiegelelementen angeordnet, an denen die Laserpulse in Umfangsrichtung umgelenkt werden, wie dies bei der Umlenkeinrichtung der Fall ist, die in der US 2019/0173257 A1 beschrieben ist.

Bei einer weiteren Ausführungsform weist die Umlenkeinrichtung mindestens ein weiteres Spiegelelement mit einer gekrümmten Spiegelfläche auf, wobei die Laserpulse von einem ersten der Mehrzahl von Spiegelelementen zu dem weiteren Spiegelelement umgelenkt werden und von dem weiteren Spiegelelement zu einem zweiten der Mehrzahl von Spiegelelementen umgelenkt werden. Bei der hier beschriebenen Ausführungsform wird von der oben beschriebenen Regel abgewichen, d.h. die Laserpulse, die von dem Festkörpermedium reflektiert wurden, werden zwischen den beiden Spiegelelementen an einem weiteren Spiegelelement umgelenkt, welches eine gekrümmte Spiegelfläche aufweist, so dass die Laserpulse drei Mal an der Umlenkeinrichtung umgelenkt bzw. reflektiert werden, bevor diese erneut auf das Festkörpermedium eingestrahlt werden. Die gekrümmte Spiegelfläche verläuft in der Regel annähernd parallel zur Mittelachse der Vorrichtung, so dass die Laserpulse in einer annähernd zur Mittelachse senkrechten Ebene von der Spiegelfläche des weiteren Spiegelelements umgelenkt werden.

Das weitere Spiegelelement, genauer gesagt dessen gekrümmte Spiegelfläche, ermöglicht es, den Gouy-Parameter der Vorrichtung ohne Limitierung durch das Linsenleiter-Regime anzupassen. Zu diesem Zweck kann die Spiegelfläche eine konkave oder konvexe sphärische Krümmung aufweisen, es ist aber auch möglich und bei großen Winkeln ggf. notwendig, dass die Spiegelfläche eine unterschiedliche Krümmung in zwei zueinander senkrechten Raumrichtungen aufweist oder dass es sich bei der Spiegelfläche um Freiformfläche handelt. Durch eine unterschiedliche Krümmung in zwei Raumrichtungen kann auch bei hohen Einfallswinkeln, unter denen die Laserpulse auf die gekrümmte Spiegelfläche treffen, eine effektiv homogene sphärische Krümmung erreicht werden, um einen fokussierten Strahlverlauf der Laserpulse zu erzeugen. Hierbei wird ausgenutzt, dass für den Fall, dass eine sphärische Spiegelfläche unter einem Winkel getroffen wird, sich in dieser Richtung - ähnlich wie bei einer verkippten Linse - die effektive Krümmung verändert. Dies bedeutet, dass die sphärische Spiegelfläche in die eine Richtung anders fokussiert als in die andere Richtung. Um diesen Effekt zu kompensieren, ist es günstig, wenn die weiter oben beschriebene Spiegelfläche eine jeweils unterschiedliche Krümmung in zwei Raumrichtungen aufweist.

Die Verwendung eines einzigen, von dem Grundkörper beabstandeten scheibenförmigen nichtlinearen optischen Festkörpermediums ist günstig, um Kosten zu sparen. Es kann aber sinnvoll sein, die Nichtlinearität der Vorrichtung insbesondere am Anfang und am Ende des Strahlwegs der Laserpulse zu erhöhen.

Bei einer Weiterbildung ist an einer Oberfläche des weiteren Spiegelelements ein bevorzugt plattenförmiges nichtlineares optisches Festkörpermedium befestigt. Zusätzlich zu dem nichtlinearen optischen Festkörpermedium, das von der Umlenkeinrichtung bzw. von dem Grundkörper beabstandet ist, kann das weitere Spiegelelement der Umlenkeinrichtung ein nichtlineares optisches Festkörpermedium aufweisen. Gegebenenfalls kann ein jeweiliges nichtlineares optisches Festkörpermedium auch an einzelnen oder ggf. an allen der Mehrzahl von Spiegelelementen mit den in der Regel planen Spiegelflächen gebildet werden, um die Nichtlinearität zu erhöhen.

Bei einer alternativen Ausführungsform weist ein jeweiliges Spiegelelement eine bevorzugt plane Spiegelfläche auf, die ausgerichtet ist, die Laserpulse von dem nichtlinearen optischen Festkörpermedium oder von der freiliegenden Spiegelfläche des Endspiegels direkt, d.h. an der Spiegelfläche des jeweiligen Spiegelelements, zu dem nichtlinearen optischen Festkörpermedium oder zu der freiliegenden Spiegelfläche des Endspiegels zurück zu reflektieren. In diesem Fall werden die Laserpulse direkt an ein- und derselben Spiegelfläche zu dem nichtlinearen optischen Festkörpermedium zurück reflektiert, d.h. es findet keine direkte Umlenkung der Laserpulse zwischen zwei Spiegelelementen der Umlenkeinrichtung statt. Um die Spiegelflächen geeignet auszurichten, können so genannte 0°-Spiegelelemente verwendet werden, deren (plane) Spiegelflächen senkrecht zur Mittenachse des jeweiligen Spiegelelements ausgerichtet sind. Um die Spiegelelemente geeignet relativ zu dem nichtlinearen optischen Festkörpermedium auszurichten, werden diese mit ihrer jeweiligen Mittelachse relativ zur Mittelachse des plattenförmigen Grundkörpers verkippt. Bei dieser Ausführungsform ist es ebenfalls günstig, wenn die Spiegelelemente in unterschiedlichen radialen Abständen zur Mittelachse angeordnet sind.

Bei einer weiteren Ausführungsform liegt ein Abstand zwischen dem Grundkörper und dem scheibenförmigen nichtlinearen optischen Festkörpermedium oder der freiliegenden Spiegelfläche des Endspiegels bei weniger als 1,5 m, bevorzugt bei weniger als 1,0 m. Auch die Vorrichtung gemäß dem zweiten Aspekt der Erfindung kann in einer kompakten Bauform realisiert werden. Eine solche Vorrichtung kann zur spektralen Verbreiterung von Laserpulsen mit Pulsenergien in der Größenordnung von ca. 1 mJ oder 10 mJ und Pulsdauern z.B. zwischen 200 fs und 2 ps unter Erhaltung der Strahlqualität eingesetzt werden. Der Abstand kann gemeinsam mit der Krümmung des nichtlinearen optischen Mediums oder der freiliegenden Spiegelfläche des Endspiegels und ggf. der Geometrie der Spiegelfläche des weiteren optischen Elements so gewählt werden, dass ein gewünschter Gouy-Parameter der Vorrichtung eingestellt wird.

Ein weiterer Aspekt der Erfindung betrifft eine Vorrichtung zur spektralen Verbreiterung von Laserpulsen, umfassend: eine Mehrzahl von Spiegelelementen, an denen jeweils eine Spiegelfläche zur Reflexion der Laserpulse gebildet ist, wobei die Mehrzahl von Spiegelelementen an einem Grundkörper befestigt ist, sowie mindestens ein bevorzugt plattenförmiges, insbesondere scheibenförmiges laseraktives Festkörpermedium zum Verstärken der Laserpulse, wobei die Mehrzahl von Spiegelelementen eine Umlenkeinrichtung bildet, bei der die bevorzugt planen Spiegelflächen der Mehrzahl von Spiegelelementen derart ausgerichtet sind, dass die Laserpulse von einer jeweiligen Spiegelfläche über das scheibenförmige laseraktive Festköpermedium zu einer anderen Spiegelfläche umgelenkt werden, und wobei der Grundkörper und das scheibenförmige laseraktive Festkörpermedium in einem Gehäuse angeordnet sind, das für die Erzeugung einer nichtlinearen Phase durch Selbstphasenmodulation mit einem Gas gefüllt ist, das nichtlineare optische Eigenschaften aufweist.

Bei diesem Aspekt der Erfindung wird ein Scheibenlaserverstärker, der beispielsweise wie in der weiter oben zitierten US 2019/0173257 A1dargestellt ist, als Vorrichtung zur Verbreiterung von Laserpulsen genutzt. Zu diesem Zweck ist in das Gehäuse, in dem die Laserpulse propagieren, ein Gas eingebracht, welches zur Erzeugung einer nichtlinearen Phase der Laserpulse durch Selbstphasenmodulation dient. Bei dem Gas, welches nichtlineare optische Eigenschaften aufweist, kann es sich beispielsweise um ein Edelgas, z.B. Neon, Argon oder einer Mischung aus mehreren Gas-Bestandteilen handeln. Bei diesem Aspekt der Erfindung kann auf das Vorsehen eines nichtlinearen optischen Festkörpermediums ggf. vollständig verzichtet werden.

Bei einer Ausführungsform sind die Spiegelelemente über einen jeweiligen Verbindungsabschnitt fest mit dem Grundkörper verbunden und/oder die weiteren Spiegelelemente sind über einen jeweiligen Verbindungsabschnitt fest mit dem weiteren Grundkörper verbunden, wobei bevorzugt Ausnehmungen in dem Grundkörper und/oder in dem weiteren Grundkörper gebildet sind, die jeweils eine Mantelfläche zur Verbindung mit dem Verbindungsabschnitt eines jeweiligen Spiegelelements oder eines jeweiligen weiteren Spiegelelements aufweisen. Die Spiegelelemente und der Grundkörper können beispielsweise wie in der US 2019/0173257 A1 beschrieben ausgebildet sein, welche durch Bezugnahme in ihrer Gesamtheit zum Inhalt dieser Anmeldung gemacht wird. Wie dort beschrieben ist, kann es sich bei dem Grundkörper um einen plattenförmigen Grundkörper handeln.

Der Grundkörper und/oder die Spiegelelemente (typischerweise mit Ausnahme des nichtlinearen optischen Festkörpermediums) sind bevorzugt aus Glas, beispielsweise aus Quarzglas, aus einer Glaskeramik oder aus einem metallischen Material, ggf. aus einer Legierung, gebildet. Die Wahl eines für die Laserpulse im Wesentlichen transparenten Materials, z.B. in Form von Glas, insbesondere in Form von Quarzglas, für den Grundkörper hat den Vorteil, dass dieses Material insbesondere bei Laserpulsen mit Wellenlängen im sichtbaren oder nahen infraroten Wellenlängenbereich kaum Wärme durch Absorption erzeugt und der Grundkörper sich daher nicht thermisch verformt. Die gefügten, geschweißten oder geklebten Spiegelelemente weisen deshalb eine starre Ausrichtung zueinander auf und relative Drifts werden minimiert.

Bei der festen bzw. dauerhaften Verbindung des Verbindungsabschnitts mit dem Grundkörper kann es sich um eine stoffschlüssige Verbindung unter Verwendung eines Fügemittels, z.B. eine Klebeverbindung und/oder eine Lötverbindung oder um eine direkte Verbindung ohne Verwendung eines Fügemittels handeln. Bei der direkten, dauerhaften Verbindung kann es sich beispielsweise um eine Schweißverbindung oder um eine Bonding-Verbindung handeln. Die Spiegelelemente können einteilig ausgebildet oder monolithisch gefügt sein. Für den Fall, dass das plattenförmige nichtlineare optische Festkörpermedium an der Oberfläche angesprengt ist, ist dieses nicht dauerhaft an der Oberfläche des Spiegelelements befestigt, d.h. in diesem Fall ist das Spiegelelement als Ganzes (d.h. mit dem nichtlinearen optischen Festkörpermedium) nicht monolithisch gefügt. Der Grundkörper ist bevorzugt einteilig ausgebildet, kann aber auch monolithisch gefügt sein.

Bevorzugt sind die Verbindungsabschnitte der Spiegelelemente, die insbesondere rotationssymmetrisch zu einer Mittelachse ausgebildet sein können, in die Ausnehmungen eingesetzt, so dass diese punktuell, linienförmig oder ggf. flächig an der Mantelfläche einer jeweiligen Ausnehmung anliegen. Es ist nicht zwingend erforderlich, dass die Ausnehmungen gegenüber dem restlichen Grundkörper zurückgesetzt sind. Die Ausnehmungen können Durchbrüche in dem Grundkörper bilden. Der Verbindungsabschnitt eines jeweiligen Spiegelelements kann als Kugelsegment ausgebildet sein und das Kugelsegment kann an einer sphärisch gekrümmten Oberfläche des Kugelsegments fest bzw. dauerhaft mit der Mantelfläche der Ausnehmung verbunden sein. Alternativ kann der Verbindungsabschnitt zylindrisch ausgebildet sein und bevorzugt eine plane Grundfläche aufweisen.

Bei einer weiteren Ausführungsform weist das nichtlineare optische Festkörpermedium eine Dicke von weniger als 1 mm, bevorzugt von weniger als 500 µm auf. Wie weiter oben beschrieben wurde, ist es für die Vorrichtungen gemäß beider Aspekte der Erfindung günstig, wenn ein (transparentes) nichtlineares optisches Festkörpermedium verwendet wird, das eine geringe Dicke aufweist.

Als Material des nichtlinearen optischen Festkörpermediums kann beispielsweise SiO₂, Saphir, YAG, CaF₂, MgF₂, ... verwendet werden. Diese Materialien weisen einen für die vorliegende Anwendung geeigneten Wert des nichtlinearen Brechungsindex (n₂) auf. Insbesondere CaF₂ und MgF₂ weisen einen geringen nichtlinearen Brechungsindex auf, der bei gleichem nichtlinearen Phasenhub höhere Pulsenergien ermöglicht. Es versteht sich, dass das nichtlineare optische Festkörpermedium auch aus anderen als den hier beschriebenen Materialien gebildet sein kann.

Ein weiterer Aspekt der Erfindung betrifft ein optisches System, umfassend: eine Strahlquelle zur Erzeugung von Laserpulsen bzw. eines gepulsten Laserstrahls, eine Vorrichtung zur spektralen Verbreiterung der Laserpulse, die wie weiter oben beschrieben ausgebildet ist, sowie eine Vorrichtung zur zeitlichen Kompression der spektral verbreiterten Laserpulse.

Wie weiter oben beschrieben wurde, wird die Vorrichtung zur spektralen Verbreiterung der Laserpulse typischerweise verwendet, die Pulsdauer der Laserpulse mit Hilfe der nachfolgenden Vorrichtung zur zeitlichen Kompression typischerweise um einen Faktor 10-20 zu verkürzen, wobei die Puls- und Strahlqualität weitgehend erhalten bleibt. Wie weiter oben beschrieben wurde, ist die hier beschriebene Vorrichtung zur spektralen Verbreiterung der Laserpulse insbesondere zur Verkürzung von ultrakurzen Laserpulsen mit Pulsdauern zwischen z.B. 200 fs und 2 ps und bei Pulsenergien größer oder gleich 1 mJ vorteilhaft, die von der Strahlquelle erzeugt werden. Laserpulse mit diesen Pulsparametern können z.B. von einer Strahlquelle erzeugt werden, die Verstärkerketten mit kohärent kombinierten oder einzelnen Faser-, Rod(Stäbchen)-, Scheiben- oder Slab-Verstärkern oder regenerativen Verstärkern, z.B. auf Scheibenlaserbasis, oder deren Kombinationen aufweist.

Die Vorrichtung zur zeitlichen Kompression der Laserpulse weist typischerweise eines oder mehrere dispersive optische Elemente auf. Bei den dispersiven Elementen, mit denen die Pulsdauer der Laserpulse nach dem Durchlaufen der Vorrichtung zur spektralen Verbreiterung komprimiert werden können, kann es sich beispielsweise um gechirpte oder dispersive Spiegel (z.B. GTI(Gires-Tournois-Interferometer)-Spiegel), um Prismen-Kompressoren oder um Gitter-Kompressoren handeln.

Um die spektrale Verbreiterung der Laserpulse für die nachfolgende Kompression konstant zu halten, kann das optische System ausgebildet sein, die Pulsenergie der Laserpulse zu regeln, die in die Vorrichtung zur spektralen Verbreiterung der Laserpulse eintreten. Zu diesem Zweck kann das optische System mindestens einen Sensor aufweisen, z.B. in Form einer Photodiode, welcher die Pulsenergie der Laserpulse vor dem Eintritt in die Vorrichtung zur spektralen Verbreiterung misst. Das Ergebnis der Messung kann von einer Steuer- und/oder Regeleinrichtung dazu verwendet werden, die Leistung der Strahlungsquelle zu regeln, um die Pulsenergie konstant zu halten.

Das optische System kann auch ausgebildet sein, die Strahllage der Laserpulse bzw. des gepulsten Laserstrahls vor dem Eintritt in die Vorrichtung zur spektralen Verbreiterung zu korrigieren bzw. konstant zu halten. Zu diesem Zweck kann das optische System eine oder mehrere positionsempfindliche Photodioden (z.B. Lateraleffektdioden oder segmentierte Quadranten-Positionsdetektoren), Kameras oder Kombinationen aus diesen Sensoren aufweisen. Zur Kontrolle der Einkopplung der Laserpulse in die Vorrichtung und zur Modenanpassung (s.u.) ist es günstig, wenn die Strahlgröße, insbesondere der Strahldurchmesser, auf einem oder auf mehreren Spiegeln im Strahlweg der Laserpulse vor dem Eintritt in die Vorrichtung oder auch innerhalb der Vorrichtung, z.B. an oder hinter ausgewählten Spiegelflächen mit einer oder mehreren Kameras beobachtet wird.

Bei einer Ausführungsform weist das optische System eine Einstelleinrichtung zur Einstellung eines insbesondere zirkularen Polarisationszustands der in die Vorrichtung zur spektralen Verbreiterung der Laserpulse eingekoppelten Laserpulse auf. Es hat sich gezeigt, dass die Stärke der nichtlinearen Phase, die bei der Selbstphasenmodulation erzeugt wird, vom Polarisationszustand der Laserpulse abhängig ist. Ein zirkularer Polarisationszustand der in die Vorrichtung eingekoppelten Laserpulse kann günstig für die spektrale Verbreiterung sein. Da die Laserpulse beim Austritt aus der Strahlquelle in der Regel linear polarisiert sind, kann als Einstelleinrichtung zur Einstellung des zirkularen Polarisationszustands eine λ/4-Verzögerungseinrichtung, z.B. ein λ/4-Plättchen, verwendet werden, welches den linearen Polarisationszustand der Laserpulse - bei geeigneter Ausrichtung der Vorzugsachse - in einen zirkularen Polarisationszustand überführt. Der zirkulare Polarisationszustand der spektral verbreiterten Laserpulse kann am Ausgang der Vorrichtung zur nichtlinearen spektralen Verbreiterung über eine weitere Einstelleinrichtung, z.B. über ein weiteres λ/4-Plättchen, in einen linearen Polarisationszustand umgewandelt werden. Dies ist günstig, da ansonsten das bzw. die dispersiven optischen Elemente der Vorrichtung zur zeitlichen Kompression der spektral verbreiterten Laserpulse nicht mehr richtig funktionieren.

Bei einer weiteren Ausführungsform weist das optische System eine Anpassungseinrichtung zur Anpassung einer Strahlkaustik der in die Vorrichtung zur spektralen Verbreiterung eingekoppelten Laserpulse an eine (transversale) Eigenmode der Multipass-Zelle auf. Wie allgemein üblich wird unter der Strahlkaustik der Verlauf der transversalen Strahlprofile entlang der optischen Propagationsachse der Laserpulse verstanden. Diese Strahlkaustik, insbesondere der Durchmesser und die Strahldivergenz bzw. der Öffnungswinkel, wird an die (transversale) Eigenmode der Multipass-Zelle angepasst.

Bei Multipass-Zellen in Form von Herriott-Zellen kann die Interaktionslänge der Laserpulse mit einem nichtlinearen Medium durch einfache Mittel sehr lang und gleichzeitig der Strahldurchmesser kontrolliert im Wesentlichen gleichbleibend bzw. konstant gehalten werden. Eine Voraussetzung hierfür ist es, dass die in die Vorrichtung bzw. in die Multipass-Zelle eintretenden Laserpulse (bzw. der gepulste Laserstrahl) innerhalb einer gewissen Toleranz an die äquivalente transversale Eigenmode der Herriott-Zelle angepasst wird.

Die äquivalente transversale Eigenmode ist näherungsweise die transversale Eigenmode, die eine Herriott-Zelle aufweisen würde, wenn ihre Endspiegel als geschlossener Resonator ausgerichtet wären (alle Abstände und Krümmungen der Spiegelflächen blieben gleich). Daraus ergibt sich allerdings auch ein Nachteil der Herriott-Zelle, nämlich, dass eine gewünschte Mode und dazugehörige Strahlkaustik nur näherungsweise durch wenige realisierbare Kombinationen von Krümmungsradien der Endspiegel der Herriott-Zelle und der Anzahl der Umläufe (d.h. der Anzahl der Reflexionen an den Endspiegeln) in der Herriott-Zelle erreicht wird.

Durch das vollständige Ersetzen beider Endspiegel der Herriott-Zelle oder eines der Endspiegel der Herriott-Zelle durch eine Mehrzahl von Spiegelelementen können die oben beschriebenen Nachteile vermieden werden. Insbesondere kann die Anzahl und es können die Krümmungsradien bzw. die Ausrichtung der Spiegelflächen der Spiegelelemente so gewählt bzw. angepasst werden, dass die Anzahl der Umläufe in der Multipass-Zelle unabhängig von der gewählten transversalen Mode bzw. Strahlkaustik gewählt werden kann. Bei der weiter oben beschriebenen Multipass-Zelle der Vorrichtung zur spektralen Verbreiterung der Laserpulse handelt es sich somit technisch nicht mehr um eine Herriott-Zelle.

Bei der weiter oben beschriebenen Multipass-Zelle der Vorrichtung zur spektralen Verbreiterung der Laserpulse ist es günstig, wenn die Laserpulse beim Eintritt in die Multipass-Zelle an die transversale Mode der Multipass-Zelle angepasst werden. Zu diesem Zweck kann eine Moden-Anpassungseinrichtung zur Anpassung des Strahlprofils der in die Vorrichtung zur spektralen Verbreiterung eingekoppelten Laserpulse dienen. Die Moden-Anpassungseinrichtung kann beispielsweise ein Strahlteleskop (Modenanpassungs-Teleskop), eine Linse, einen gekrümmten Spiegel, etc. aufweisen, um das Strahlprofil der Laserpulse bzw. des gepulsten Laserstrahls an die Eigenmode der Multipass-Zelle anzupassen, bevor diese in die Multipass-Zelle eintreten. Die Anpassung des Strahlprofils kann beispielsweise die Anpassung des Strahlquerschnitts bzw. des Strahldurchmessers und/oder die Anpassung der Divergenz des gepulsten Laserstrahls bzw. der Laserpulse umfassen.

Eine Fehlanpassung des gepulsten Laserstrahls beim Eintritt in die Multipass-Zelle an die Eigenmode der Multipass-Zelle führt im allgemeinen Fall zu von Umlauf zu Umlauf variierenden Kaustiken entlang des Strahlengangs innerhalb der Multipass-Zelle. Diese Variation (Atmen) kann z.B. durch die Änderung des Strahldurchmessers der Laserpulse auf den jeweiligen Spiegelflächen der Spiegelelemente des Grundkörpers bzw. der jeweiligen weiteren Spiegelflächen der weiteren Spiegelelemente des weiteren Grundkörpers, die den äquivalenten Resonator definieren, charakterisiert werden. Diese Änderung des Strahldurchmessers hat über alle Umläufe innerhalb der Multipass-Zelle ein Minimum und ein Maximum.

Bevorzugt ist das optische System ausgebildet, über alle Umläufe ein Verhältnis zwischen einem maximalen Strahldurchmesser der Laserpulse und einem minimalen Strahldurchmesser der Laserpulse auf einem der Endspiegel bzw. an den Spiegelflächen in der Multipass-Zelle zu erzeugen, das bei weniger als 12, besonders bevorzugt bei weniger als 6, insbesondere bei weniger als 3 liegt. Dies ist günstig, um einer Zerstörung der Optiken durch zu hohe Intensitäten vorzubeugen.

Ein solches Verhältnis bzw. ein solcher Faktor für das Verhältnis von maximalem Strahldurchmesser zu minimalem Strahldurchmesser kann beispielsweise mit Hilfe der weiter oben beschriebenen Moden-Anpassungseinrichtung eingestellt bzw. erzeugt werden. Zwischen den Spiegelflächen bzw. den Optiken der Multipass-Zelle kann das Verhältnis zwischen dem maximalen Strahldurchmesser und dem minimalen Strahldurchmesser deutlich größer als 12 sein, beispielsweise können die Laserpulse an einer Fokusposition fokussiert werden, an welcher der Strahldurchmesser sehr klein ist.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a,b: schematische Darstellungen eines Beispiels einer Vorrichtung zur spektralen Verbreiterung von Laserpulsen mit Hilfe von plattenförmigen nichtlinearen Festkörpermedien in einer Multipass-Zelle zur mehrfachen Reflexion der Laserpulse,
- Fig. 2a,b: schematische Darstellungen einer Vorrichtung zur spektralen Verbreiterung von Laserpulsen mit Hilfe eines gasförmigen nichtlinearen Mediums mit einer Multipass-Zelle analog zu Fig. 1a,b,
- Fig. 3: eine schematische Darstellung einer Vorrichtung zur spektralen Verbreiterung von Laserpulsen mit Hilfe eines gasförmigen nichtlinearen Mediums, das eine Umlenkeinrichtung mit einer Mehrzahl von Spiegelelementen zur Umlenkung der Laserpulse zu einer freiliegenden Spiegelfläche eines Endspiegels aufweist,
- Fig. 4: eine Darstellung eines Beispiels einer Vorrichtung zur spektralen Verbreiterung von Laserpulsen mit einer Umlenkeinrichtung mit einer Mehrzahl von Spiegelelementen zur Umlenkung der Laserpulse zu einem plattenförmigen nichtlinearen optischen Festkörpermedium,
- Fig. 5a,b: schematische Darstellungen von Spiegelflächen der Spiegelelemente, die in drei Kreisringen bzw. in einem Kreisring und in zwei Ringen mit unterschiedlichen radialen Abständen zu einer Mittelachse angeordnet sind,
- Fig. 6a,b: schematische Darstellungen von zwei Spiegelelementen der Umlenkeinrichtung sowie eines weiteren Spiegelelements der Umlenkeinrichtung mit einer gekrümmten Spiegelfläche,
- Fig. 7: eine schematische Darstellung von Spiegelflächen der Spiegelelemente der Umlenkeinrichtung, die in zwei Ringen mit unterschiedlichen radialen Abständen zur Mittelachse angeordnet sind und an denen die Laserpulse direkt zu dem nichtlinearen optischen Festkörpermedium zurück reflektiert werden, sowie
- Fig. 8: eine schematische Darstellung eines optischen Systems mit einer Vorrichtung zur spektralen Verbreiterung und einer Vorrichtung zur zeitlichen Kompression der spektral verbreiterten Laserpulse.

In der folgenden Beschreibung der Zeichnungen werden für gleiche bzw. funktionsgleiche Bauteile identische Bezugszeichen verwendet.

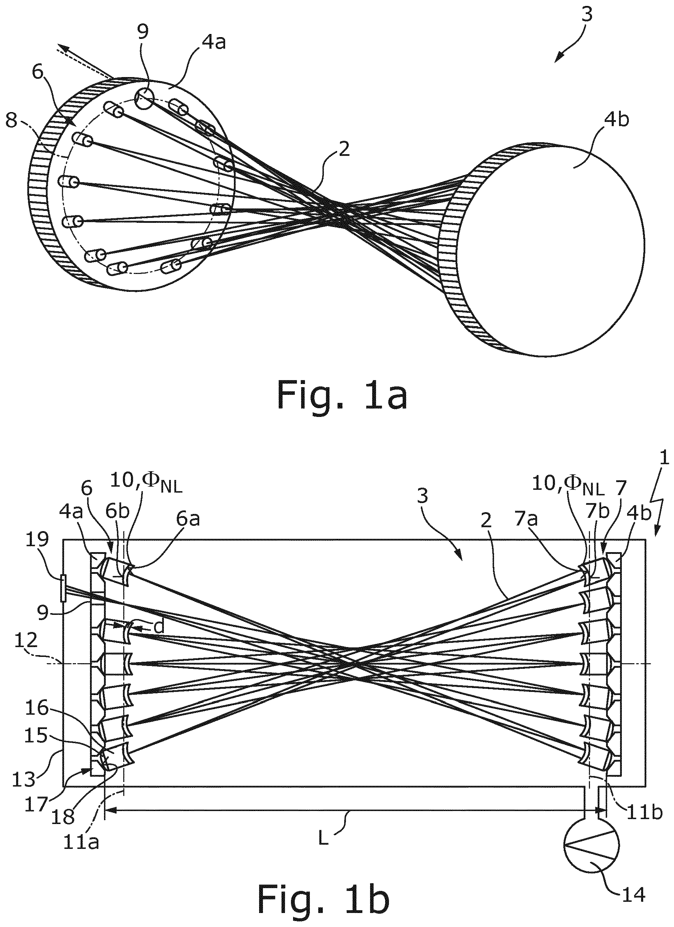

**Fig. 1a****,b** zeigen einen beispielhaften Aufbau einer Vorrichtung 1 zur spektralen Verbreiterung von Laserpulsen 2, deren Strahlverlauf zur Vereinfachung der Darstellung mit durchgezogenen Linien dargestellt ist. Die Vorrichtung 1 umfasst eine Multipass-Zelle 3, die einen plattenförmigen Grundkörper 4a und einen weiteren plattenförmigen Grundkörper 4b aufweist, zwischen denen die Laserpulse 2 mehrmals hin und her reflektiert werden.

Zu diesem Zweck ist an dem Grundkörper 4a eine Anzahl von zwölf Spiegelelementen 6 befestigt und an dem weiteren Grundkörper 4b ist eine Anzahl von dreizehn weiteren Spiegelelementen 7 befestigt. Die Spiegelelemente 6 und die weiteren Spiegelelemente 7 sind jeweils entlang eines Kreises 8 auf dem Grundkörper 4a bzw. auf dem weiteren Grundkörper 4b angeordnet. Es versteht sich, dass die Spiegelelemente 6 und die weiteren Spiegelelemente 7 auch auf zwei oder mehr Kreisen angeordnet sein können. Die weiteren Spiegelelemente 7 sind in gleichen Abständen in Umfangsrichtung entlang des weiteren Grundkörpers 4b angeordnet. Gleiches gilt für die Spiegelelemente 6, wobei an Stelle des dreizehnten Spiegelelements eine Durchgangsbohrung 9 in dem Grundkörper 4a gebildet ist, durch welche die Laserpulse 2 in den Zwischenraum zwischen dem Grundkörper 4a und dem weiteren Grundkörper 4b ein- und wieder ausgekoppelt werden. Für die Ein- und Auskopplung der Laserpulse 2 in bzw. aus der Multipass-Zelle 3 kann an Stelle der Durchgangsbohrung 9 auch ein optisches Element in dem Zwischenraum zwischen dem Grundkörper 4a und dem weiteren Grundkörper 4b angeordnet sein.

Ein jeweiliges Spiegelelement 6 weist eine Oberfläche 6a und ein jeweiliges weiteres Spiegelelement 7 weist eine Oberfläche 7a auf, an denen jeweils ein plattenförmiges nichtlineares optisches Festkörpermedium 10 zur Erzeugung einer nichtlinearen Phase Φ_{NL} durch Selbstphasenmodulation befestigt ist. Das Festkörpermedium 10 kann beispielsweise aus SiO₂, Saphir, YAG, CaF₂, MgF₂, ... gebildet sein. Das Festkörpermedium 10 ist im gezeigten Beispiel gekrümmt, wobei die Krümmung des Festkörpermediums 10 an die konkave Krümmung der Oberfläche 6a, 7a des jeweiligen Spiegelelements 6 bzw. des jeweiligen weiteren Spiegelelements 7 angepasst ist. Das jeweilige Festkörpermedium 10 wird mit einer der gekrümmten Oberfläche 6a, 7a des jeweiligen Spiegelelements 6 bzw. des jeweiligen weiteren Spiegelelements 7 zugewandten, in der Krümmung angepassten rückwärtigen Seite flächig an der konkav gekrümmten Oberfläche 6a, 7a des jeweiligen Spiegelelements 6 bzw. des jeweiligen weiteren Spiegelelements 7 befestigt. An seiner der konkav gekrümmten Oberfläche 6a, 7a zugewandten Seite weist das plattenförmige Festkörpermedium 10 eine reflektierende Beschichtung auf, welche die - ebenfalls konkav gekrümmte - Spiegelfläche 6b, 7b des Spiegelelements 6 bzw. des weiteren Spiegelelements 7 bildet.

Bei dem in Fig. 1a,b gezeigten Beispiel ist das jeweilige plattenförmige Festkörpermedium 10 an der Oberfläche 6a, 7a angeklebt, es kann aber auch durch eine andere stoffschlüssige Verbindung, z.B. durch ein (Glas-)Lot mit der Oberfläche 6a, 7a verbunden werden. Auch eine direkte, dauerhafte Verbindung zwischen dem Festkörpermedium 10 und der Oberfläche 6a, 7a des jeweiligen Spiegelelements 6 bzw. des jeweiligen weiteren Spiegelelements 7 ist möglich, z.B. eine Bonding-Verbindung oder eine Schweiß-Verbindung. Das Festkörpermedium 10 kann ggf. auch durch eine lösbare Verbindung an der Oberfläche 6a, 7a des jeweiligen Spiegelelements 6 bzw. des jeweiligen weiteren Spiegelelements 7 befestigt werden, beispielsweise durch Ansprengen.

Um die Funktionalität einer herkömmlichen Multipass-Zelle 3 zu erfüllen, weisen alle Spiegelflächen 6b dieselbe sphärische Krümmung bzw. denselben Krümmungsradius auf und liegen entlang eines Kreisrings 11a einer Kugelfläche, der in der Schnittdarstellung von Fig. 1b durch eine gestrichelte Linie angedeutet ist, die durch alle Spiegelflächen 6b des Kreisrings verläuft. Entsprechend weisen alle weiteren Spiegelflächen 7b dieselbe sphärische Krümmung bzw. denselben Krümmungsradius auf und sind entlang eines weiteren Kreisrings 11b einer weiteren Kugelfläche angeordnet, der in Fig. 1b ebenfalls durch eine gestrichelte Linie angedeutet ist. Der Grundkörper 4a und der weitere Grundkörper 4b sind in einem Abstand L voneinander angeordnet, der im gezeigten Beispiel bei weniger als 1,5 m, genauer gesagt bei ca. 1 m, liegt.

Aufgrund der Kerrlinse der jeweiligen Festkörpermedien 10 kann - abweichend von der Darstellung in Fig. 1b - der Krümmungsradius der Spiegelflächen 6b und der weiteren Spiegelflächen 7b sowie die Dicke eines jeweiligen Festkörpermediums 10 jeweils abhängig von der Position eines jeweiligen Spiegelelements 6 bzw. eines jeweiligen weiteren Spiegelelements 7 im Strahlengang angepasst bzw. (geringfügig) korrigiert werden, um die Kerrlinse zu kompensieren. Auf diese Weise kann erreicht werden, dass der effektive Krümmungsradiums der Spiegelflächen 6b bzw. der weiteren Spiegelflächen 7b unter Berücksichtigung der Kerrlinse und ggf. von weiteren nichtlinearen Effekten konstant bleibt.

Der Abstand L und der Krümmungsradius R sind wie bei Multipass-Zellen bzw. bei Herriott-Zellen üblich derart aufeinander abgestimmt, dass sich eine gewünschte Anzahl von Reflexionen innerhalb der Multipass-Zelle 3 ergibt. Die im gezeigten Beispiel entlang eines jeweiligen Kreisrings montieren Spiegelelemente 6 bzw. weiteren Spiegelelemente 7 zeigen ungefähr in Richtung der Mittelachse der Multipass-Zelle 3, die senkrecht zu dem Grundkörper 4a und dem weiteren Grundkörper 4b ausgerichtet ist. Ein jeweiliges Spiegelelement 6 an dem Grundkörper 4a ist relativ zur Mittelachse so ausgerichtet, dass ein jeweiliges weiteres Spiegelelement 7 an dem weiteren Grundkörper 4b von den Laserpulsen 2 getroffen wird, so dass sich der in Fig. 1a,b dargestellte Kaustikverlauf ergibt. Die Zahl der Reflexionen ist geometrieabhängig von dem Kreisring, entlang dessen die Spiegelelemente 6 bzw. die weiteren Spiegelelemente 7 montiert sind, dem Abstand der Spiegelelemente 6, und der weiteren Spiegelelemente 7 zueinander und deren Größe.

Der Krümmungsradius R der konkav gekrümmten Spiegelflächen 6b bzw. weiteren Spiegelflächen 7b hängt davon ab, ob die Multipass-Zelle in der Art eines konzentrischen Resonators betrieben wird, oder ob (quasi-)kollimierte Laserpulse 2 verwendet werden. Im ersten Fall ist es günstig, wenn der Krümmungsradius R der Spiegelflächen 6b bzw. der weiteren Spiegelflächen 7b zwischen 1 m und 15 m liegt, im zweiten Fall ist es günstig, wenn der Krümmungsradius R bei weniger als ca. 1000 m und bei mehr als ca. 10 m, insbesondere bei mehr als 20 m, liegt. Im zweiten Fall ist es günstig, wenn die Gesamtbrechkraft, d.h. die Summe der Brechkräfte der Spiegelflächen 6b aller Spiegelelemente 6 und der Brechkräfte der weiteren Spiegelflächen 7b aller weiteren Spiegelelemente 7, zwischen 5 m und unendlich liegt.

Die Verwendung von vergleichsweise großen Krümmungsradien R der Spiegelflächen 6b bzw. der weiteren Spiegelflächen 7b hat sich als günstig erwiesen, da keine Zwischenfoki erforderlich sind. Die im gezeigten Beispiel konstante Dicke d eines jeweiligen Festkörpermediums 10 sollte nicht zu groß gewählt werden, um eine katastrophale Selbstfokussierung bei der nichtlinearen spektralen Verbreiterung von Laserpulsen 3 mit hohen Pulsenergien in der Größenordnung von z.B. 100 mJ oder darüber zu verhindern. Die Dicke d des jeweiligen Festkörpermediums 10 sollte bei Pulsenergien in der Größenordnung von mJ oder darüber typischerweise bei weniger als ca. 1 mm oder 500 µm liegen.

Zusätzlich ist es günstig, den Druck des in der Multipass-Zelle 3 vorhandenen Gases auf z.B. weniger als ca. 100 mbar zu reduzieren, um zu verhindern, dass es zu einer Ionisierung des Gases kommt, was eine Verschlechterung der Qualität der auf die spektrale Verbreiterung folgenden zeitlichen Komprimierung der Pulsdauern der Laserpulse 2 zur Folge hätte. Wie in Fig. 1b zu erkennen ist, ist die Multipass-Zelle 3 in einem Gehäuse 13 angeordnet, das mit einer Pumpeinrichtung 14 in Form einer Vakuum-Pumpe in Verbindung steht, um in dem Innenraum des Gehäuses 13 einen gewünschten Druck einzustellen bzw. um das Gehäuse 13 zu evakuieren.

Wie in Fig. 1b ebenfalls zu erkennen ist, sind die Spiegelelemente 6 über einen jeweiligen Verbindungsabschnitt 15, der im gezeigten Beispiel ein Kugelsegment bildet, dauerhaft mit dem Grundkörper 4a verbunden. An den Verbindungsabschnitt 15 schließt sich bei den Spiegelelementen 6 ein zylindrischer Abschnitt 16 an, dessen Stirnseite die konkav gekrümmte Oberfläche 6a bildet, an der das plattenförmige, gekrümmte Festkörpermedium 10 befestigt ist. Der Verbindungsabschnitt 15 in Form des Kugelsegments eines jeweiligen Spiegelelements 6 ist in eine Ausnehmung 17 des Grundkörpers 4a eingesetzt und liegt an einer Mantelfläche 18 der Ausnehmung 17 an. Bei der Mantelfläche 18 kann es sich um eine konische Fläche, um eine sphärische Fläche oder um eine Freiformfläche handeln. Die feste bzw. dauerhafte Verbindung ist im gezeigten Beispiel als Klebeverbindung realisiert, kann aber auch auf andere Weise hergestellt werden. Auch der Verbindungsabschnitt 15 bzw. die dauerhafte Verbindung mit dem Grundkörper 4a kann auf andere Weise realisiert werden, beispielsweise wie dies in der weiter oben zitierten US 2019/0173257 A1 beschrieben ist. Die weiteren Spiegelelemente 7 sind in analoger Weise am weiteren Grundkörper 4b befestigt bzw. mit diesem verbunden.

Bei der in Fig. 1b gezeigten Seitenansicht wurde zur besseren Übersichtlichkeit eine vereinfachte Darstellung gewählt, in der die Spiegelelemente 6 und die weiteren Spiegelelemente 7 jeweils äquidistant dargestellt sind. In der Realität sind die auf einem Kreis liegenden Spiegelelemente 6 bzw. weiteren Spiegelelemente 7 in der Seitenansicht unterschiedlich weit voneinander entfernt angeordnet. Insbesondere überlappen sich in der Realität die Spiegelelemente 6 und die weiteren Spiegelelemente 7 am oberen Rand und am unteren Rand der Darstellung von Fig. 1b in einer realen Seitenansicht teilweise.

Durch die feste, dauerhafte Verbindung der Spiegelelemente 6 bzw. der weiteren Spiegelelemente 7 mit dem jeweiligen plattenförmigen Grundkörper 4a, 4b kann eine Dejustage der Spiegelelemente 6 bzw. der weiteren Spiegelelemente 7 im Betrieb der Vorrichtung 1 verhindert werden, d.h. diese weist eine ausreichende Robustheit für den industriellen Einsatz auf. Die Vorrichtung 1 bzw. die Multipass-Zelle 3 kann zudem mit einer geringen Baulänge L realisiert werden.

Wie weiter oben beschrieben wurde, werden die über ein in dem Gehäuse 13 vorgesehenes Fenster 19 ausgekoppelten, spektral verbreiterten Laserpulse 2 in einer in Fig. 1a,b nicht dargestellten Vorrichtung zur zeitlichen Kompression der Pulsdauer beispielsweise um einen Faktor von 10-20 gegenüber der Pulsdauer der über das Fenster 19 in die Vorrichtung 1 eingekoppelten Laserpulse 3 verkürzt, die von einer nicht bildlich dargestellten Strahlquelle erzeugt werden und die beispielsweise eine Pulsdauer von ca. 1 ps aufweisen können. Die Vorrichtung zur zeitlichen Kompression der Laserpulse kann beispielsweise eines oder mehrere dispersive optische Elemente aufweisen.

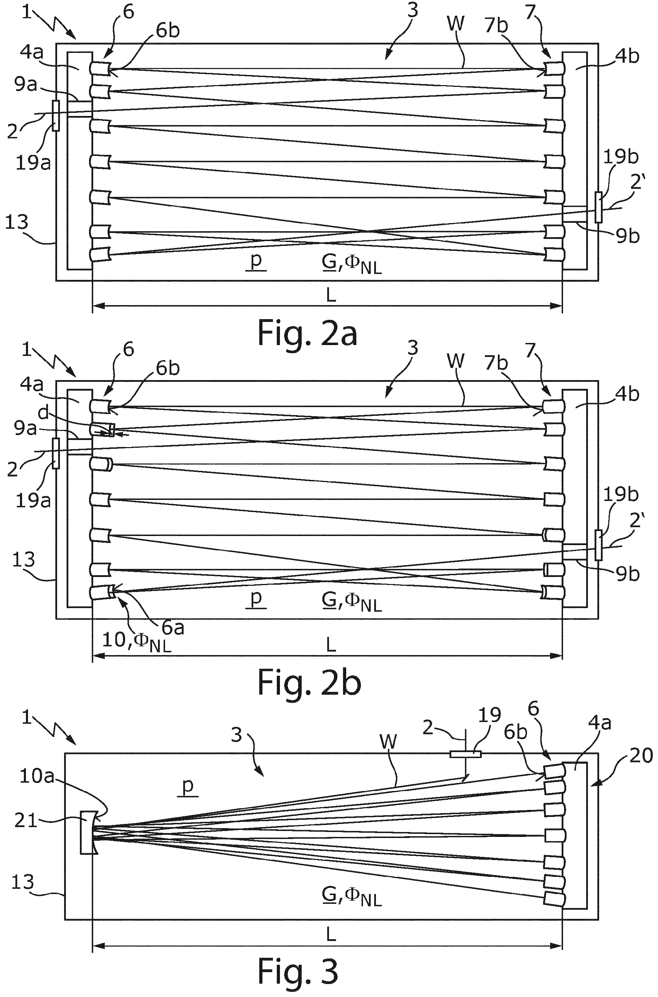

**Fig. 2a****,****b** zeigen eine Vorrichtung 1 zur spektralen Verbreiterung von Laserpulsen, die im Wesentlichen wie in Fig. 1a,bdargestellt ausgebildet ist. Die Vorrichtung 1 weist einen Grundkörper 4a auf, an dem eine Mehrzahl von Spiegelelementen 6 befestigt ist, sowie einen weiteren Grundkörper 4b, an dem eine Mehrzahl von weiteren Spiegelelementen 7 befestigt ist. Im Gegensatz zu dem in Fig. 1a,b gezeigten Beispiel ist das Gehäuse 13, in dem die Multipass-Zelle 3 angeordnet ist, bei den in Fig. 2a,b gezeigten Beispielen mit einem gasförmigen nichtlinearen optischen Medium G gefüllt, das die nichtlineare Phase der Laserpulse 2 erzeugt. Bei dem gasförmigen nichtlinearen optischen Medium G handelt es sich im gezeigten Beispiel um ein Edelgas. Grundsätzlich können aber auch andere Gase oder Gasgemische als nichtlineare optische Festkörpermedien dienen, beispielsweise andere zweiatomige Gas wie Stickstoff, oder Gasgemische, z.B. Luft.

Anders als bei der in Fig. 1a,b gezeigten Vorrichtung 1 weisen die in Fig. 2a,b gezeigten Vorrichtungen 1 keine Pumpeinrichtung 14 zum Evakuieren des Gehäuses 13 auf, auch wenn die Verwendung einer solchen Pumpeinrichtung 14 grundsätzlich möglich ist. Das Gehäuse 13 ist gasdicht abgeschlossen, druckdicht und weist ein Eintrittsfenster 19a zum Eintritt der Laserpulse 2 in das Gehäuse 13 und ein Austrittsfenster 19b zum Austritt der Laserpulse 2 aus dem Gehäuse 13 auf. Die über das Eintrittsfenster 19a in das Gehäuse 13 eintretenden Laserpulse 2 treten über eine Durchgangsbohrung 9a in dem Grundkörper 4a in die Multipass-Zelle 3 ein. Eine weitere Durchgangsbohrung 9b in dem weiteren Grundkörper 4b dient zum Durchtritt der spektral verbreiterten Laserpulse 2' aus der Multipass-Zelle 3, die über das Austrittsfenster 13b aus dem Gehäuse 13 austreten.

Die in Fig. 2a,b gezeigten Vorrichtungen 1 weisen nicht bildlich dargestellte Bauelemente in Form von steuerbaren Ein- und Auslassventilen zum Einlass des gasförmigen nichtlinearen optischen Mediums G in das Gehäuse 13 bzw. zum Auslass des gasförmigen nichtlinearen optischen Mediums G aus dem Gehäuse 13 auf. Mit Hilfe der Ein- bzw. Auslassventile kann ein Gasdruck p in dem Gehäuse 13 eingestellt werden. Der Gasdruck des nichtlinearen optischen Mediums G bzw. der Gesamtdruck p in dem Gehäuse 13 kann beispielsweise zwischen 50 mbar und 10 bar liegen. Der Gesamtdruck p kann über den gesamten Druckbereich einstellbar sein, dies ist aber nicht zwingend erforderlich. Für den Fall, dass der Gasdruck p in dem Gehäuse 13 geregelt werden soll, kann in dem Gehäuse 13 ein Gasdrucksensor angeordnet sein, der mit einer Regelungseinrichtung in Verbindung steht, um den Gasdruck p in dem Gehäuse 13 auf einem Soll-Gasdruck zu halten.

Bei der in Fig. 2a gezeigten Vorrichtung 1 sind die Spiegelflächen 6b der Spiegelelemente 6 und die weiteren Spiegelflächen 7b der weiteren Spiegelelemente 7 jeweils freiliegend, d.h. an diesen ist kein nichtlineares Festkörpermedium 10 befestigt, wie dies bei der in Fig. 1a,b gezeigten Vorrichtung der Fall ist. Die nichtlineare Phase Φ_{NL} der Laserpulse 2 wird bei dem in Fig. 2a gezeigten Beispiel somit allein durch das gasförmige nichtlineare optische Medium G erzeugt. Bei der in Fig. 2a gezeigten Vorrichtung 1 sind die Spiegelflächen 6b der Spiegelelemente 6 und die weiteren Spiegelflächen 7b der weiteren Spiegelelemente 7 konkav gekrümmt, wie dies auch bei den in Fig. 1a,b gezeigten Vorrichtungen 1 der Fall ist.

Bei der in Fig. 2b gezeigten Vorrichtung 1 weist eine erste Gruppe von Spiegelflächen 6b der Spiegelelemente 6 sowie ein erste Gruppe der weiteren Spiegelflächen 7b der weiteren Spiegelelemente 6 eine konkave Krümmung auf, eine zweite Gruppe weist eine konvexe Krümmung auf und eine dritte Gruppe ist plan ausgebildet. Die Krümmung der Spiegelflächen 6b bzw. der weiteren Spiegelflächen 7b variiert somit entlang des Strahlwegs W der Laserpulse 2 und kann dazu verwendet werden, um die nichtlineare Phase Φ_{NL} der Laserpulse 2 geeignet einzustellen.

Bei der in Fig. 2b gezeigten Vorrichtung 1 dient nicht nur das gasförmige nichtlineare Medium G zur Erzeugung der nichtlinearen Phase Φ_{NL} der Laserpulse 2, vielmehr ist an ausgewählten Oberflächen 6a der Spiegelelemente 6 sowie an ausgewählten Oberflächen 7a der weiteren Spiegelelemente 7 jeweils ein nichtlineares plattenförmiges Festkörpermedium 10 befestigt. Wie in Fig. 2b zu erkennen ist, nimmt hierbei ein Abstand (d.h. die Länge eines Abschnitts des Strahlwegs W) zwischen jeweils zwei im Strahlweg W der Laserpulse 2 in der Vorrichtung 1 bzw. in der Multipass-Zelle 3 benachbart angeordneten nichtlinearen optischen Festkörpermedien 10 mit zunehmender Länge des Strahlwegs W der Laserpulse 2 in der Multipass-Zelle 3 (ausgehend vom Eintritt der Laserpulse 2 in die Multipass-Zelle 3) ab. Im Sinne dieser Anmeldung schließt die Abnahme des Abstandes zwischen jeweils zwei im Strahlweg benachbarten Festkörpermedien 10 auch den Fall ein, dass zwischen drei im Strahlweg W aufeinander folgenden Festkörpermedien 10 der Abstand im Wesentlichen konstant ist, wie dies beim dritten, vierten und fünften in Fig. 2b dargestellten nichtlinearen optischen Festkörpermedium 10 der Fall ist. Voraussetzung für die Erfüllung der Bedingung, dass der Abstand (die Länge eines Abschnitts des Strahlwegs W) zwischen jeweils zwei im Strahlweg W benachbarten Festkörpermedien mit zunehmender Länge des Strahlwegs W abnimmt, ist es aber, dass bei mindestens drei im Strahlweg W aufeinander folgenden Festköpermedien 10 in der Multipass-Zelle 3 eine Abnahme des Abstandes stattfindet, wie dies bei dem im Strahlweg W ersten, zweiten und dritten Festkörpermedium 10 der Fall ist.

Bei der in Fig. 2b gezeigten Vorrichtung 1 nimmt die Dicke d eines jeweiligen nichtlinearen Festkörpermediums 10 mit zunehmender Länge des Strahlwegs W der Laserpulse 2 in der Multipass-Zelle 3 zu, d.h. das im Strahlweg W erste Festkörpermedium 10 weist die kleinste Dicke d auf und das im Strahlweg W letzte, sechste Festkörpermedium 10 weist die größte Dicke d auf. Auch durch die zunehmende Dicke d der Festkörpermedien 10 nimmt die entlang des Strahlwegs aufgesammelte nichtlineare Phase Φ_{NL} mit zunehmender Länge des Strahlwegs W stärker zu als dies bei einer konstanten Dicke d der Festkörpermedien 10 der Fall wäre.

Es versteht sich, dass die in Fig. 2b gezeigte Verwendung von nichtlinearen optischen Festkörpermedien 10 auch bei der in Fig. 2a gezeigten Vorrichtung 1 möglich ist. Ebenso ist es möglich, dass die in Fig. 2b gezeigte Vorrichtung 1 keine nichtlinearen optischen Festkörpermedien 10 sondern allein das gasförmige nichtlineare Medium G aufweist.

**Fig. 3** zeigt eine Vorrichtung 1, die sich von den in Fig. 1a,bund in Fig. 2a,b gezeigten Vorrichtungen 1 dadurch unterscheidet, dass nur ein Grundkörper 4a mit einer Mehrzahl von Spiegelelementen 6 mit Spiegelflächen 6b vorhanden ist, die im gezeigten Beispiel eine plane Geometrie aufweisen. An Stelle des weiteren Grundkörpers 4b ist bei der in Fig. 3 gezeigten Vorrichtung ein Endspiegel 21 mit einer konkav gekrümmten, freiliegenden Spiegelfläche 10a in dem Gehäuse 13 angeordnet. Der Endspiegel 21 ist monolithisch ausgebildet und weist einen deutlich kleineren Durchmesser auf als der Grundkörper 4a, an dem die Mehrzahl von Spiegelelementen 6 befestigt ist. Bei der in Fig. 3 gezeigten Vorrichtung 1 wird wie bei der in Fig. 2a gezeigten Vorrichtung 1 die nichtlineare Phase Φ_{NL} allein durch ein gasförmiges nichtlineares optisches Medium G erzeugt.

Bei der in Fig. 3 gezeigten Vorrichtung 1 bildet der Grundkörper 4a mit der Mehrzahl von Spiegelelementen 6 eine Umlenkeinrichtung 20. Die Umlenkeinrichtung 20 dient dazu, die durch ein Fenster 19 in das Gehäuse 13 eingestrahlten und über einen Umlenkspiegel zu der Spiegelfläche 10a des Endspiegels 21 umgelenkten Laserpulse 2 mehrfach zu der Spiegelfläche 10a des Endspiegels 21 zurück zu reflektieren. Wie dies in Fig. 2a zu erkennen ist, sind die Umlenkeinrichtung 20 und die frei liegende Spiegelfläche 10a zur Bildung einer Multipass-Zelle 3 in einem vorgegebenen Abstand L voneinander angeordnet, wobei der Abstand L im Zentrum der Spiegelfläche 10 gemessen wird.

Die Umlenkeinrichtung 20 ist im gezeigten Beispiel ausgebildet, die Laserpulse 2 an einer der planen Spiegelflächen 6b zu retroreflektieren, so dass diese nach der spektralen Verbreiterung durch das Fenster 19 aus dem Gehäuse 13 der Multipass-Zelle 3 austreten. Es versteht sich, dass alternativ ein separates Eintrittsfenster 19a und Austrittsfenster 19b in dem Gehäuse 13 vorgesehen werden können, wie dies in Fig. 2a,b der Fall ist. An dem Endspiegel 21 kann an Stelle der freiliegenden Oberfläche 10a auch ein nichtlineares optisches Festkörpermedium 10 befestigt sein, wie dies nachfolgend beschrieben wird. In diesem Fall ist es nicht erforderlich, dass in die Multipass-Zelle 3 ein gasförmiges nichtlineares Medium G eingebracht wird.

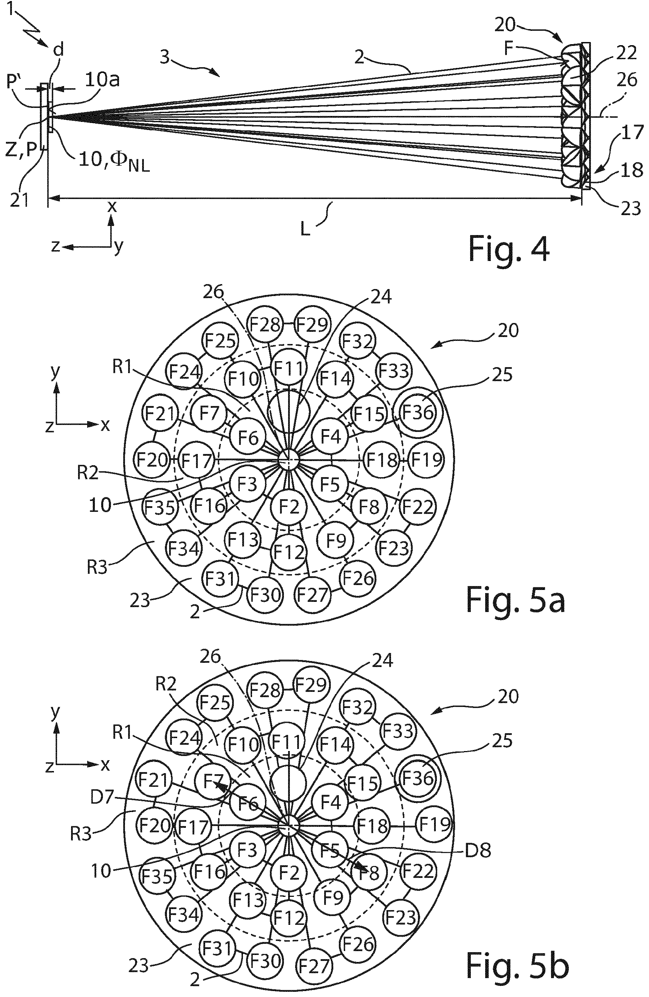

**Fig. 4** zeigt ein Beispiel einer Vorrichtung 1 zur spektralen Verbreiterung von Laserpulsen 2, welche eine Umlenkeinrichtung 20 sowie ein scheibenförmiges laseraktives Festkörpermedium 10 zur Erzeugung einer nichtlinearen Phase Φ_{NL} der Laserpulse 2 durch Selbstphasenmodulation aufweist, das im Folgenden als Festkörpermedium 10 bezeichnet wird. Das Festkörpermedium10 ist auf einem Stützkörper 21 befestigt und an seiner dem Stützkörper 21 zugewandten Seite verspiegelt, d.h. das Festkörpermedium 10 weist eine Spiegelfläche 10a auf, um spektral zu verbreiternde Laserpulse 2, die von der Umlenkeinrichtung 20 auf das Festkörpermedium 10 treffen, zur Umlenkeinrichtung 20 zurück zu reflektieren, so dass das Festkörpermedium 10 mehrmals von den Laserpulsen 2 durchlaufen und hierbei verbreitert wird. An seiner dem Stützkörper 21 abgewandten Seite kann das Festkörpermedium 10 eine Antireflex-Beschichtung oder eine antireflektierende Mikrostrukturierung aufweisen. Im gezeigten Beispiel ist der Stützkörper 21 als Wärmesenke ausgebildet. Alternativ ist es möglich, die bzw. eine zusätzliche Wärmesenke an dem Stützkörper 21 zu befestigen. Das Festkörpermedium 10 und die Umlenkeinrichtung 20 bilden gemeinsam eine Multipass-Zelle 3, wie dies in Zusammenhang mit Fig. 3 beschrieben ist.

Um einen solchen Mehrfachdurchgang durch das Festkörpermedium 10 zu ermöglichen, werden die Laserpulse 2 von an der Umlenkeinrichtung 20 gebildeten Spiegelelementen 22 in Form von Umlenkspiegeln, genauer gesagt an deren (planen) Spiegelflächen F2 bis F35 (vgl. **Fig. 5a****,b**) umgelenkt. Es versteht sich, dass die Umlenkeinrichtung 20 auch weniger oder mehr Spiegelelemente 22 bzw. Spiegelflächen aufweisen kann (s.u.). Die Spiegelelemente 22 sind an einem plattenförmigen Grundkörper 23 der Umlenkeinrichtung 20 mit Hilfe einer monolithischen Aufbautechnik befestigt, wie sie weiter oben im Zusammenhang mit Fig. 1a,b beschrieben wurde. Der plattenförmige Grundkörper 23 ist parallel zur XY-Ebene eines XYZ-Koordinatensystems und parallel zum scheibenförmigen Festkörpermedium 10 ausgerichtet.

Wie in Fig. 5a,b zu erkennen ist, treten die Laserpulse 3, die von einer nicht gezeigten gepulsten Laserquelle erzeugt werden, über eine Durchgangsöffnung 24 durch den plattenförmigen Grundkörper 23 hindurch und sind hierbei derart ausgerichtet, dass diese das Festkörpermedium 10 mittig treffen und an diesem, genauer gesagt an dessen verspiegelter rückseitigen Spiegelfläche 10a, zu einer zweiten Spiegelfläche F2 reflektiert werden. Die von dem Festkörpermedium 10 ausgehenden Laserpulse 2 werden an der zweiten Spiegelfläche F2 direkt zu einer dritten, benachbarten Spiegelfläche F3 umgelenkt bzw. reflektiert. Die dritte Spiegelfläche F3 ist bezüglich des Festkörpermediums 10 derart ausgerichtet, dass die Laserpulse 2 von der dritten Spiegelfläche F3 erneut zum Festkörpermedium 10 umgelenkt bzw. reflektiert werden. An dem Festkörpermedium 10 werden die Laserpulse 3 zu einer vierten Spiegelfläche F4 umgelenkt, von dieser direkt zu einer fünften Spiegelfläche F5 reflektiert, usw.

Bei den in Fig. 5a,b gezeigten Umlenkeinrichtungen 20 erfolgt die Umlenkung der Laserpulse 2 somit abwechselnd zwischen dem Festkörpermedium 10 und einem jeweiligen Paar von im gezeigten Beispiel benachbart angeordneten Spiegelflächen F2, F3; F4, F5; F5, F6; ..., F34, F35. Der Strahlweg der Laserpulse 2 zwischen dem Festkörpermedium 10 und den Spiegelflächen F2, F3; F4, F5; F5, F6; ..., F34, F35, genauer gesagt dessen Projektion in die XY-Ebene, ist in Fig. 3a,b ebenfalls dargestellt. Bei den in Fig. 3a,b gezeigten Beispielen weisen die Umlenkeinrichtungen 20 jeweils einen Endspiegel 25 auf, dessen Spiegelfläche F36 senkrecht zu den auf die Spiegelfläche F36 des Endspiegels 25 treffenden Laserpulsen 2 ausgerichtet ist, so dass die Laserpulse 2 zu dem Festkörpermedium 10 (d.h. in sich) zurück reflektiert werden und den Strahlweg durch die Umlenkeinrichtung 20 ein zweites Mal mit umgekehrter Propagationsrichtung durchlaufen. Es versteht sich, dass an Stelle des Endspiegels 25 eine weitere Durchgangsöffnung in der Umlenkeinrichtung 20 vorgesehen sein kann, um die Laserpulse 2 aus der Vorrichtung 1 auszukoppeln, ohne dass diese die Umlenkeinrichtung 20 erneut durchlaufen, oder ein Umlenkspiegel vorgesehen sein kann, der die Laserpulse 2 aus der Vorrichtung 1 auskoppelt.

Bei der in Fig. 5a gezeigten Umlenkeinrichtung 20 sind die Spiegelelemente 22 in einem kreisförmigen Muster, genauer gesagt in drei Kreisringen R1, R2, R3 konzentrisch um eine sich in Z-Richtung erstreckende Mittelachse 26 des plattenförmigen Grundkörpers 7 angeordnet. Die radialen Abstände der in einem jeweiligen Kreisring R1, R2, R3 angeordneten Spiegelelemente 22 sind gleich, so dass die Laserpulse 2 an einem Auftreffpunkt P auf das Festkörpermedium 10 bzw. auf die Spiegelfläche 10a treffen, der sich im Zentrum Z des scheibenförmigen Festkörpermediums 10 befindet, welches auch von der Mittelachse 26 durchlaufen wird.

Bei der in Fig. 5b gezeigten Umlenkeinrichtung 20 sind die Spiegelelemente 22 ebenfalls in einem im Wesentlichen kreisförmigen Muster in drei Kreisringen R1, R2, R3 konzentrisch um die Mittelachse 26 angeordnet. Während die Spiegelelemente 22 in dem ersten, innersten Kreisring R1 im gleichen radialen Abstand zur Mittelachse 26 angeordnet sind, sind die Spiegelelemente 22 in dem zweiten und dritten Kreisring R2, R3 geringfügig in radialer Richtung zueinander versetzt. Dies trifft beispielsweise für die siebte Spiegelfläche F7 und für die achte Spiegelfläche F8 zu, die beide innerhalb des zweiten Kreisrings R2 liegen, aber bei denen ein radialer Abstand D7 der siebten Spiegelfläche F7 von der Mittelachse 26 kleiner ist als ein radialer Abstand D8 der achten Spiegelfläche F8 von der Mittelachse 26. Durch die unterschiedlichen radialen Abstände D7, D8 treffen die Laserpulse 2 nicht an einer Auftreffposition P im Zentrum Z des scheibenförmigen Festkörpermediums 10 auf, sondern an einer zum Zentrum Z in radialer Richtung versetzten Auftreffposition P'. Entsprechendes gilt für die anderen Spiegelflächen F9 bis F35, die in dem zweiten und in dem dritten Kreisring R2, R3 angeordnet sind und die dazu dienen, die Laserpulse 2 an jeweils unterschiedlichen, zum Zentrum Z versetzten Auftreffpositionen P' auf das Festkörpermedium 10 auftreffen zu lassen.

Das Auftreffen der Laserpulse 2 an unterschiedlichen Auftreffpositionen P, P' auf das Festkörpermedium 10 ist günstig, um die Gefahr einer Zerstörung durch die Laserpulse 2 zu verringern, die typischerweise Pulsenergien in der Größenordnung von ca. 10 mJ oder darüber aufweisen. Es versteht sich, dass die Spiegelelemente 22 der Umlenkeinrichtung 20 auch auf andere Weise angeordnet sein können, beispielsweise in einer Anordnung in Form von Mehrecken, beispielsweise in Form eines Musters von Sechsecken.

Um eine Defokussierung der Laserpulse 2 beim Durchlaufen der Umlenkeinrichtung 20 zu verhindern, ist das Festkörpermedium 10 und somit auch die Spiegelfläche 10a geringfügig konkav gekrümmt, wobei der Krümmungsradius R abhängig von der jeweiligen Kerrlinse in der Größenordnung zwischen 20 m und 100 m liegt. Auch ein Abstand L zwischen dem Festkörpermedium 10, genauer gesagt der Spiegelfläche 10a, und dem plattenförmigen Grundkörper 20 kann bei der Konstruktion der Vorrichtung 1 so gewählt werden, dass der Gouy-Parameter einen gewünschten Wert annimmt. Der Abstand L zwischen dem Festkörpermedium 2 bzw. dessen Spiegelfläche 10a und dem plattenförmigen Grundkörper 23 liegt im gezeigten Beispiel bei weniger als 1,5 m, insbesondere bei weniger als 1,0 m.

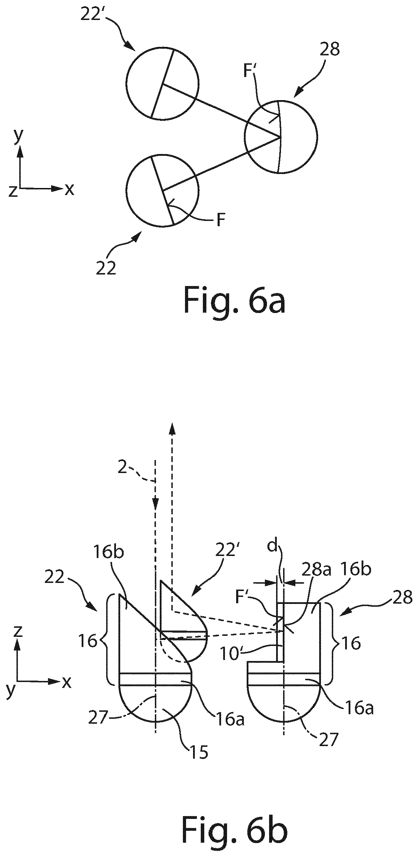

Bei den in Fig. 5a,b gezeigten Beispielen erfolgt die Umlenkung zwischen den Spiegelflächen F2, F3; F4, F5; F6, F7; ... benachbarter Spiegelelemente 22 eines jeweiligen Kreisrings R1, R2, R3 direkt, und zwar im Wesentlichen in azimutaler Richtung bzw. in Umfangsrichtung. Die jeweilige plane Spiegelfläche F ist hierbei unter einem Winkel von ca. 45° zu einer Mittelachse 27 des jeweiligen Spiegelelements 22, 22' ausgerichtet, wie dies in **Fig. 6a****,****b** angedeutet ist. Bei dem in Fig. 4a,b gezeigten Beispiel erfolgt die Umlenkung jedoch nicht direkt zwischen zwei benachbart angeordneten Spiegelelementen 22, 22', vielmehr werden die Laserpulse 2 von einem ersten Spiegelelement 22 zu einem weiteren Spiegelelement 28 umgelenkt, welches eine gekrümmte Spiegelfläche F' aufweist. An der gekrümmten Spiegelfläche F' werden die Laserpulse 2 zu dem zweiten Spiegelelement 22' umgelenkt bzw. reflektiert. Das weitere Spiegelelement 28 unterscheidet sich von den anderen Spiegelelementen 22, 22' der Umlenkeinrichtung 20 einerseits durch die Krümmung der Spiegelfläche F', andererseits durch die Ausrichtung der Spiegelfläche, die im gezeigten Beispiel parallel zur Mittelachse 27 des weiteren Spiegelelements 28 ausgerichtet ist, d.h. unter einem Winkel von praktisch 0° zur Mittelachse 27. Auf diese Weise erfolgt die Umlenkung zwischen den beiden Spiegelelementen 22, 22' (annähernd) in der XY-Ebene senkrecht zur Mittelachse 27, die mit der Z-Richtung des XYZ-Koordinatensystems übereinstimmt.

Bei der gekrümmten Spiegelfläche F' kann es sich um eine sphärisch gekrümmte Fläche handeln, aber auch um eine asphärische Fläche bzw. um eine Freiformfläche. Durch die Wahl der Krümmung der Spiegelfläche F' des weiteren Spiegelelements 28 kann zusätzlich zur Wahl der Krümmung des scheibenförmigen Festkörpermediums 10 den Gouy-Parameter beeinflusst und auf einen gewünschten Wert eingestellt werden. Wie in Fig. 6b zu erkennen ist, ist an einer Oberfläche 28a des weiteren Spiegelelements 28 ein weiteres platten- bzw. scheibenförmiges nichtlineares Festkörpermedium 10' befestigt, und zwar auf die weiter oben in Zusammenhang mit Fig. 1b beschriebene Weise. Die Dicke d des weiteren Festkörpermediums 10' beträgt ebenso wie die Dicke d des scheibenförmigen Festkörpermediums 10 weniger als 500 µm, um eine katastrophale Selbstfokussierung zu vermeiden.

Wie in Fig. 6b ebenfalls zu erkennen ist, sind die Spiegelelemente 22, 22' und das weitere Spiegelelement 28 auf die weiter oben in Zusammenhang mit Fig. 1b beschriebene Weise ausgebildet, d.h. diese weisen einen rotationssymmetrisch zur Mittelachse 27 ausgebildeten Verbindungsabschnitt 15 auf, der ein Kugelsegment bildet, um die Spiegelelemente 22, 22' sowie das weitere Spiegelelement 28 mit dem plattenförmigen Grundkörper 23 zu verbinden. An den Verbindungsabschnitt 15 schließt sich ein zylindrischer Abschnitt 16 an, an der in einen vollzylindrischen Abschnitt 16a und einen prismatischen Abschnitt 16b bzw. in einen gestuften Abschnitt 16b unterteilt ist. Die plane Spiegelfläche F bildet einen Schnitt durch den prismatischen Abschnitt 16b des jeweiligen Spiegelelements 22, 22' in Form einer elliptischen Fläche. An Stelle einer planen Fläche kann ggf. auch eine gekrümmte Spiegelfläche F verwendet werden, beispielsweise eine parabolisch gekrümmte Spiegelfläche F, um eine fokussierende oder eine defokussierende Wirkung zu erzeugen.

Der Verbindungsabschnitt 15 eines jeweiligen Spiegelelements 22 ist wie in Zusammenhang mit Fig. 1b beschrieben dauerhaft in einer Ausnehmung 17 (vgl. Fig. 2) an dem plattenförmigen Grundkörper 23 befestigt, und zwar im gezeigten Beispiel einer Mantelfläche 18 einer jeweiligen Ausnehmung 17 verklebt. Auch die in Zusammenhang mit Fig. 2 beschriebene Vorrichtung 1 weist durch die monolithische Aufbautechnik eine hohe Robustheit auf. Bei den in Fig. 4a,b gezeigten Spiegelelementen 22, 22' kann es sich beispielsweise um zwei benachbarte Spiegelelemente des zweiten Kreisrings R2 handeln, während das weitere Spiegelelement 28 im dritten Kreisring R3 in Umfangsrichtung zwischen den beiden Spiegelelementen 22, 22' angeordnet ist.

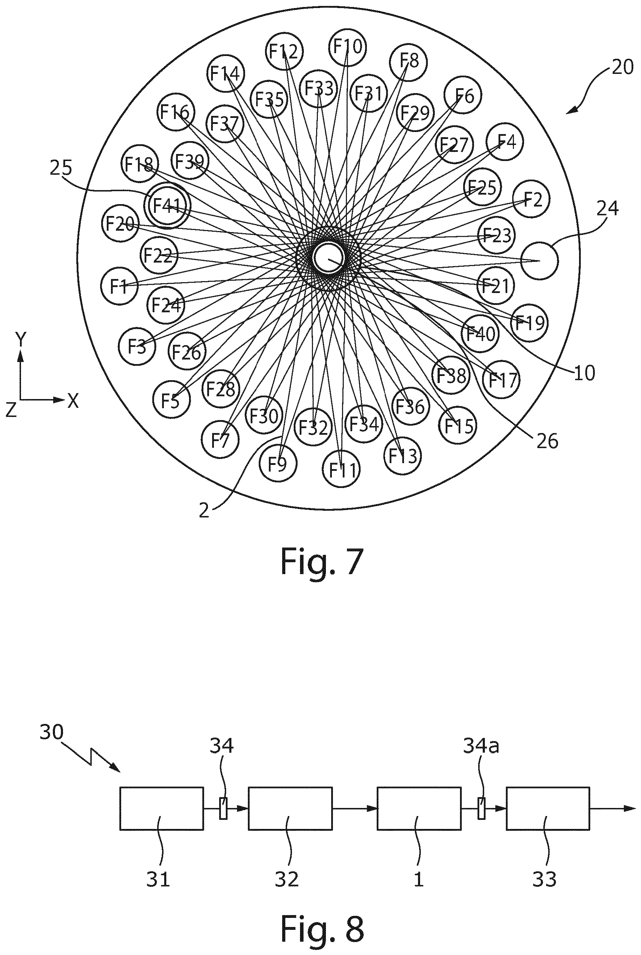

**Fig. 7** zeigt ein weiteres Beispiel einer Umlenkeinrichtung 20 mit einer Mehrzahl von Spiegelelementen 22 mit jeweiligen Spiegelflächen F1 bis F41 in einer zu Fig. 3a,b analogen Darstellung. Die Spiegelelemente 22 sind mit Hilfe der weiter oben beschriebenen monolithischen Aufbautechnik mit dem plattenförmigen Grundkörper 23 verbunden. Im Gegensatz zu dem in Fig. 5a,b gezeigten Beispiel werden bei der in Fig. 7 gezeigten Umlenkeinrichtung 20 die Laserpulse 2 von einer jeweiligen Spiegelfläche F1, F2, ... ausschließlich über das nichtlineare optische Festkörpermedium 10 zu einer im Strahlengang nachfolgenden Spiegelfläche F2, F3, ... umgelenkt. Mit anderen Worten weist ein jeweiliges Spiegelelement 22 eine im gezeigten Beispiel plane Spiegelfläche F1, F2, ... auf, die so ausgerichtet ist, dass die Laserpulse 2, die von dem nichtlinearen optischen Festkörpermedium 10 auf die jeweilige Spiegelfläche F1, F2, ... treffen, unmittelbar von der jeweiligen Spiegelfläche F1, F2, .... zu dem nichtlinearen optischen Festkörpermedium 10 zurück reflektiert werden. Wie bei dem in Fig. 5b dargestellten Beispiel sind die Spiegelelemente 22 von Fig. 7 geringfügig in radialer Richtung zueinander versetzt, um zu erreichen, dass die Laserpulse 2 in einem Kreisring um das Zentrum bzw. um die Mittelachse 26 des Grundkörpers 23 auf das scheibenförmige nichtlineare optischen Festkörpermedium 10 treffen.

Im Gegensatz zu den in Fig. 4 und in Fig. 5a,b dargestellten Spiegelelementen 22 sind bei den Spiegelelementen 22 von Fig. 7 die Spiegelflächen F1, F2, ... nicht unter einem Winkel von 45°, sondern senkrecht zur jeweiligen (nicht bildlich dargestellten) Mittelachse 27 des Spiegelelements 22 ausgerichtet (auch als 0°-Spiegel bezeichnet, auch wenn der Winkel nur näherungsweise 0° beträgt). Die Umlenkung des Laserstrahls 2 von und zu dem scheibenförmigen nichtlinearen optischen Festkörpermedium 10 wird durch eine Ausrichtung der Mittelachsen 27 der jeweiligen Spiegelelemente 22 unter einem geeignet gewählten Winkel zur Mittelachse 26 des Grundkörpers 23 erreicht. Mit Hilfe der in Fig. 7 gezeigten Umlenkeinrichtung 20 kann bei gleichem Bauraum eine größere Anzahl von Durchgängen durch das nichtlineare optische Festkörpermedium 10 erreicht werden als dies bei den in Fig.53a,b dargestellten Umlenkeinrichtungen 20 der Fall ist.

Auch mit Hilfe der in Fig. 4 gezeigten Vorrichtung 1 können Laserpulse 2 mit hohen Pulsenergien von ca. 10 mJ oder darüber spektral verbreitert werden, ohne dass sich hierbei die Pulsqualität verschlechtert. Da die in Fig. 4 gezeigte Vorrichtung 1 ohne Zwischenfoki auskommt, kann auf eine Evakuierung ggf. verzichtet werden. Für den Fall, dass der Druck in der Vorrichtung bzw. in dem Zwischenraum zwischen dem Festkörpermedium 10 und der Umlenkeinrichtung 20 reduziert werden muss, ist es in der Regel nicht erforderlich, den Druck so stark abzusenken wie dies bei der in Fig.1a,bgezeigten Multipass-Zelle 3 der Fall ist. Die Absenkung des Drucks kann auf die in Zusammenhang mit Fig. 1b beschriebene Weise erfolgen, d.h. unter Verwendung eines Gehäuses und einer Pumpeinrichtung.

Für den Fall, dass in das Gehäuse ein Gas mit nichtlinearen optischen Eigenschaften eingebracht wird, kann bei der in Fig. 4 gezeigten Vorrichtung 1 auf das nichtlineare optische Festkörpermedium 2 verzichtet werden, da das Gas eine nichtlineare Phase Φ_{NL} durch Selbstphasenmodulation erzeugt. In diesem Fall kann das nichtlineare optische Festkörpermedium 10 in der Vorrichtung 1 durch ein laseraktives Festkörpermedium ersetzt werden, welches zur Verstärkung der Laserpulse 2 dient.

**Fig. 8** zeigt ein optisches System 30, das zur Erzeugung von ultrakurzen Laserpulsen mit Pulsdauern in der Größenordnung von z.B. weniger als 100 fs ausgebildet ist. Das optische System 30 weist eine Strahlquelle 31 zur Erzeugung von Laserpulsen 2 auf, die Pulsenergien in der Größenordnung von 1 mJ und Pulsdauern in der Größenordnung zwischen z.B. 200 fs und 2 ps aufweisen. Zur Erzeugung der Laserpulse 2 mit derartigen Pulsparametern kann die Strahlquelle 31 eine oder mehrere Verstärkerketten mit kohärent kombinierten oder einzelnen Faser-, Rod(Stäbchen)-, Scheiben- oder Slab-Verstärkern oder regenerativen Verstärkern, z.B. auf Scheibenlaserbasis, oder deren Kombinationen aufweisen.

Um die Pulsdauern der von der Strahlquelle 31 erzeugten Laserpulse 2 typischerweise um einen Faktor 10-20 zu verkürzen, weist das optische System 30 eine Vorrichtung 1 zur spektralen Verbreiterung der Laserpulse 2 sowie eine im Strahlweg nachfolgende Vorrichtung 33 zur zeitlichen Kompression der spektral verbreiterten Laserpulse 2' auf. Die Vorrichtung 1 zur spektralen Verbreiterung der Laserpulse 2 ist wie weiter oben beschrieben ausgebildet.

Die Vorrichtung 33 zur zeitlichen Kompression der Laserpulse weist eines oder mehrere dispersive optische Elemente auf, bei denen es sich beispielsweise um gechirpte oder dispersive Spiegel (z.B. GTI(Gires-Tournois-Interferometer)-Spiegel), um Prismen-Kompressoren oder um Gitter-Kompressoren handeln kann.

Das in Fig. 8 gezeigte optische System 30 weist auch eine Einstelleinrichtung 34 zur Einstellung eines zirkularen Polarisationszustands der Laserpulse 2 vor dem Eintritt in die Vorrichtung 1 zur spektralen Verbreiterung auf. Als Einstelleinrichtung 34 wird im gezeigten Beispiel eine λ/4-Platte verwendet, die den linearen Polarisationszustand der aus der Strahlquelle 31 austretenden Laserpulse 2 in einen zirkularen Polarisationszustand umwandelt. Zwischen der Vorrichtung 1 zur spektralen Verbreiterung und der Vorrichtung 33 zur zeitlichen Kompression der spektral verbreiterten Laserpulse 2 ist bei dem in Fig. 8 gezeigten Beispiel eine weitere polarisationsbeeinflussende Einstelleinrichtung 34a angeordnet, welche den zirkularen Polarisationszustand der spektral verbreiterten Laserpulse 2' wieder in einen linearen Polarisationszustand umwandelt.

Das optische System 30 von Fig. 8 weist zudem eine Moden-Anpassungseinrichtung 32 zur Anpassung einer Strahlkaustik der Laserpulse 2 auf, die der Vorrichtung 1 zur spektralen Verbreiterung der Laserpulse 2 zugeführt werden. Bei der Anpassungseinrichtung 32 handelt es sich im gezeigten Beispiel um ein Strahlteleskop (Moden-Anpassungsteleskop), welches die Strahlkaustik, d.h. den Verlauf der transversalen Strahlprofile entlang der optischen Propagationsachse der Laserpulse 2, an eine (äquivalente) transversale Eigenmode der Multipass-Zelle 3 anpasst. Die Moden-Anpassungseinrichtung 32 in Form des Strahlteleskops passt hierbei den Strahlquerschnitt bzw. den Strahldurchmesser und auch die Divergenz der Laserpulse 2 an die transversale Eigenmode der Multipass-Zelle 3 an.

Durch die Moden-Anpassungseinrichtung 32 kann erreicht werden, dass ein Verhältnis zwischen einem maximalen Strahldurchmesser und einem minimalen Strahldurchmesser der Laserpulse 2 bei allen Umläufen, d.h. bei allen Reflexionen an einem jeweiligen Endspiegel bzw. an einer jeweiligen Spiegelfläche 6b, F, F2, F3, ... bzw. weiteren Spiegelfläche 7b, ... in der Multipass-Zelle 3 erzeugt wird, das bei weniger als Zwölf, bei weniger als Sechs, insbesondere bei weniger als Drei liegt. Im Strahlweg W zwischen den Spiegelflächen 6b, 7b, d.h. zwischen den Optiken der Multipass-Zelle 3, kann das Verhältnis zwischen dem maximalen Strahldurchmesser und dem minimalen Strahldurchmesser auch deutlich größer als Zwölf sein.

Um die spektrale Verbreiterung der Laserpulse 2 für die nachfolgende Kompression in der Vorrichtung 33 zur zeitlichen Kompression konstant zu halten, ist das optische System 30 ausgebildet, die Pulsenergie der Laserpulse 2 zu regeln, die in die Vorrichtung 1 zur spektralen Verbreiterung der Laserpulse 2 eintreten. Zu diesem Zweck weist das optische System 30 mindestens einen Sensor auf, im gezeigten Beispiel in Form einer Photodiode, welche die Pulsenergie der Laserpulse 2 vor dem Eintritt in die Vorrichtung 1 zur spektralen Verbreiterung misst. Das Ergebnis der Messung wird von einer Steuer- und/oder Regeleinrichtung des optischen Systems 30 dazu verwendet, die Leistung der Strahlungsquelle 31 zu regeln, um die Pulsenergie konstant zu halten.

Das optische System 30 von Fig. 8 ist auch ausgebildet, die Strahllage der Laserpulse 2 bzw. des gepulsten Laserstrahls vor dem Eintritt in die Vorrichtung 1 zur spektralen Verbreiterung zu korrigieren bzw. konstant zu halten. Zu diesem Zweck weist das optische System 30 positionsempfindliche Photodioden (z.B. Lateraleffektdioden oder segmentierte Quadranten-Positionsdetektoren) sowie Kameras auf. Zur Kontrolle der Einkopplung der Laserpulse 2 in die Vorrichtung 1 zur spektralen Verbreiterung ist es günstig, wenn die Strahlgröße, insbesondere der Strahldurchmesser, auf einem oder auf mehreren Spiegeln oder Linsen im Strahlweg der Laserpulse 2 vor dem Eintritt in die Vorrichtung 1 zur spektralen Verbreiterung oder auch innerhalb der Vorrichtung 1 zur spektralen Verbreiterung mit einer oder mehreren Kameras beobachtet wird. Die Kameras können insbesondere auch an oder hinter ausgewählten Spiegelflächen 6b, F, F2, F3, ... der Multipass-Zelle 3 angeordnet sein.

## Patentansprüche

1. Vorrichtung (1) zur spektralen Verbreiterung von Laserpulsen (2), umfassend:
einer Mehrzahl von Spiegelelementen (6, 22), an denen jeweils eine Spiegelfläche (6b, F, F2, F3, ...) zur Reflexion der Laserpulse (2) gebildet ist, wobei die Mehrzahl von Spiegelelementen (6, 22) an einem Grundkörper (4a, 4, 23) befestigt ist,
sowie
mindestens ein bevorzugt plattenförmiges, insbesondere scheibenförmiges nichtlineares optisches Festkörpermedium (10) und/oder ein gasförmiges nichtlineares optisches Medium (G) zum Durchtritt der Laserpulse (2) für die Erzeugung einer nichtlinearen Phase (Φ_{NL}) durch Selbstphasenmodulation.

2. Vorrichtung nach Anspruch 1, bei welcher an einer Oberfläche (6a) mindestens eines Spiegelelements (6), an der die Spiegelfläche (6b) gebildet ist, ein nichtlineares optisches Festkörpermedium (10) befestigt ist.

3. Vorrichtung nach Anspruch 1 oder 2, weiter umfassend:
einer Mehrzahl von weiteren Spiegelelementen (7) mit weiteren Spiegelflächen (7b), wobei die Mehrzahl von weiteren Spiegelelementen (7) an einem weiteren Grundkörper (4b) befestigt ist,
wobei der Grundkörper (4a) und der weitere Grundkörper (4b) zur Bildung einer Multipass-Zelle (3) in einem vorgegebenen Abstand (L) voneinander angeordnet sind, wobei insbesondere an einer Oberfläche (7a) mindestens eines der weiteren Spiegelelemente (7), an der die weitere Spiegelfläche (6b) gebildet ist, ein nichtlineares optisches Festkörpermedium (10) befestigt ist.

4. Vorrichtung nach Anspruch 2 oder 3, bei welcher in einem Strahlweg (W) der Laserpulse (2) in der Vorrichtung (1) mindestens drei nichtlineare optische Festkörpermedien (10) angeordnet sind, wobei die Längen von Abschnitten des Strahlwegs (W) zwischen jeweils zwei im Strahlweg (W) benachbarten nichtlinearen optischen Festkörpermedien (10) unterschiedlich groß sind, wobei bevorzugt die Längen der Abschnitte des Strahlwegs (W) zwischen jeweils zwei im Strahlweg (W) benachbarten nichtlinearen optischen Festkörpermedien (10) mit zunehmender Länge des Strahlwegs (W) der Laserpulse (2) in der Vorrichtung (1) abnehmen.

5. Vorrichtung nach einem der Ansprüche 2 bis 4, bei welcher an mindestens einer Oberfläche (6a) mindestens eines Spiegelelements (6) und/oder an mindestens einer Oberfläche (7a) mindestens eines weiteren Spiegelelements (7) mindestens zwei nichtlineare optische Festkörpermedien (10) befestigt sind, deren Dicke (d) unterschiedlich groß ist, wobei bevorzugt die Dicke (d) der nichtlinearen optischen Festkörpermedien (10) mit zunehmender Länge des Strahlwegs (W) der Laserpulse (2) in der Vorrichtung (1) zunimmt.

6. Vorrichtung nach einem der vorhergehenden Ansprüche, bei welcher die Spiegelfläche (6b) mindestens eines Spiegelelements (6) durch eine reflektierende Beschichtung an einer dem Spiegelelement (6) zugewandten Seite des jeweiligen nichtlinearen optischen Festkörpermediums (10) gebildet ist und/oder bei welcher die weitere Spiegelfläche (7b) mindestens eines weiteren Spiegelelements (7) durch eine reflektierende Beschichtung an einer dem weiteren Spiegelelement (7) zugewandten Seite des jeweiligen plattenförmigen nichtlinearen optischen Festkörpermediums (10) gebildet ist.

7. Vorrichtung nach einem der vorhergehenden Ansprüche, bei welcher mindestens eine Spiegelfläche (6b) und/oder mindestens eine weitere Spiegelfläche (7b) konkav gekrümmt ist/sind, und wobei bevorzugt das nichtlineare optische Festkörpermedium (10) konkav gekrümmt ist.

8. Vorrichtung nach einem der vorhergehenden Ansprüche, bei welcher die Mehrzahl von Spiegelflächen (6b) und die Mehrzahl von weiteren Spiegelflächen (7b) jeweils auf einer gemeinsamen Kugelfläche (11a, 11b) liegen.

9. Vorrichtung nach Anspruch 8 oder 9, bei welcher die Mehrzahl von Spiegelflächen (6b) und die Mehrzahl von weiteren Spiegelflächen (7b) einen Krümmungsradius zwischen 1 m und 15 m aufweisen, oder bei welcher die Mehrzahl von Spiegelflächen (6b) und die Mehrzahl von weiteren Spiegelflächen (7b) einen Krümmungsradius (R) von weniger als 1000 m und von mehr als 10 m aufweisen.

10. Vorrichtung nach einem der vorhergehenden Ansprüche, bei welcher die Mehrzahl von Spiegelelementen (22) eine Umlenkeinrichtung (20) bildet, bei der die bevorzugt planen Spiegelflächen (F, F2, F3, ...) der Mehrzahl von Spiegelelementen (22) derart ausgerichtet sind, dass die Laserpulse (2) von einer jeweiligen Spiegelfläche (F3, F5, ...) über das scheibenförmige nichtlineare optische Festköpermedium (10) oder über eine freiliegende, bevorzugt konkav gekrümmte Spiegelfläche (10a) eines Endspiegels (21) zu einer anderen Spiegelfläche (F4, F6, ...) umgelenkt werden, wobei die Umlenkeinrichtung (20) und das scheibenförmige nichtlineare optische Festkörpermedium (10) oder die frei liegende Spiegelfläche (10a) zur Bildung einer Multipass-Zelle (3) in einem vorgegebenen Abstand (L) voneinander angeordnet sind.

11. Vorrichtung nach einem der Ansprüche 3 bis 10, weiter umfassend: ein Gehäuse (13), in dem die Multipass-Zelle (3) angeordnet ist, wobei das nichtlineare gasförmige Medium (G) bevorzugt in das Gehäuse (13) eingebracht ist und insbesondere ausgewählt ist aus der Gruppe umfassend: Edelgase, Stickstoff und Gasgemische.

12. Vorrichtung nach Anspruch 10 oder 11, bei welcher das scheibenförmige nichtlineare Festkörpermedium (10) eine Spiegelfläche (10a) aufweist, die bevorzugt konkav gekrümmt ist, und/oder bei welcher die Spiegelelemente (22) an dem Grundkörper (23) in mindestens einem, bevorzugt in mehreren Kreisringen (R1, R2, R3) angeordnet sind.

13. Vorrichtung nach einem der Ansprüche 10 bis 12, bei welcher zur Erzeugung einer von einem Zentrum (Z) versetzten Auftreffposition (P') der Laserpulse (2) auf dem scheibenförmigen nichtlinearen optischen Festkörpermedium (10) mindestens zwei der Spiegelelemente (22), zwischen denen die Laserpulse (2) zu dem scheibenförmigen nichtlinearen optischen Festkörpermedium (10) und zurück umgelenkt werden, in einem unterschiedlichen radialen Abstand (D7, D8) zu einer Mittelachse (26) des Grundkörpers (23) angeordnet sind, und/oder bei welcher die Umlenkeinrichtung (20) ausgebildet ist, die Laserpulse (2) zwischen zwei aufeinanderfolgenden Umlenkungen zu dem nichtlinearen optischen Festkörpermedium (10) oder der freiliegenden Spiegelfläche (10a) des Endspiegels (21) zwischen mindestens zwei bevorzugt benachbarten Spiegelflächen (F2, F3, F4, F5, ...) umzulenken.

14. Vorrichtung nach einem der Ansprüche 10 bis 13, bei dem die Umlenkeinrichtung (20) mindestens ein weiteres Spiegelelement (28) mit einer gekrümmten Spiegelfläche (F') aufweist, wobei die Laserpulse (2) von einem ersten der Mehrzahl von Spiegelelementen (22) zu dem weiteren Spiegelelement (28) umgelenkt wird und von dem weiteren Spiegelelement (28) zu einem zweiten der Mehrzahl von Spiegelelementen (22) umgelenkt wird, wobei insbesondere an einer Oberfläche (28a) des weiteren Spiegelelements (28) ein weiteres, bevorzugt plattenförmiges nichtlineares optisches Festkörpermedium (10') befestigt ist.

15. Vorrichtung nach einem der Ansprüche 10 bis 14, bei welcher ein jeweiliges Spiegelelement (22) eine bevorzugt plane Spiegelfläche (F, F2, F3, ...) aufweist, die ausgerichtet ist, die Laserpulse (2) von dem nichtlinearen optischen Festkörpermedium (10) oder von der freiliegenden Spiegelfläche (10a) des Endspiegels (21) unmittelbar zu dem nichtlinearen optischen Festkörpermedium (10) oder zu der freiliegenden Spiegelfläche (10a) des Endspiegels (21) zurück zu reflektieren, und/oder bei welcher ein Abstand (L) zwischen dem Grundkörper (23) und dem scheibenförmigen nichtlinearen optischen Festkörpermedium (10) oder der freiliegenden Spiegelfläche (10a) des Endspiegels (21) bei weniger als 1,5 m, bevorzugt bei weniger als 1,0 m liegt.

16. Vorrichtung nach einem der vorhergehenden Ansprüche, bei welcher die Spiegelelemente (6, 22) über einen jeweiligen Verbindungsabschnitt (15) fest mit dem Grundkörper (4a, 23) verbunden sind und/oder bei welcher die weiteren Spiegelelemente (7) über einen jeweiligen Verbindungsabschnitt (15) fest mit dem weiteren Grundkörper (4b) verbunden sind, wobei bevorzugt Ausnehmungen (17) in dem Grundkörper (4a, 23) und/oder in dem weiteren Grundkörper (4b) gebildet sind, die jeweils eine Mantelfläche (18) zur Verbindung mit dem Verbindungsabschnitt (15) eines jeweiligen Spiegelelements (4a, 22) oder eines weiteren Spiegelelements (7) aufweisen.

17. Optisches System (30), umfassend:
eine Strahlquelle (31) zur Erzeugung von Laserpulsen (2),
eine Vorrichtung (1) zur spektralen Verbreiterung der Laserpulse (2) nach einem der vorhergehenden Ansprüche, sowie
eine Vorrichtung (33) zur zeitlichen Kompression der spektral verbreiterten Laserpulse (2').

18. Optisches System nach Anspruch 26, weiter umfassend:
eine Einstelleinrichtung (34) zur Einstellung eines insbesondere zirkularen Polarisationszustands der in die Vorrichtung (1) zur spektralen Verbreiterung der Laserpulse (2) eingekoppelten Laserpulse (2), und/oder weiter umfassend:
eine Moden-Anpassungseinrichtung (32) zur Anpassung einer Strahlkaustik der in die Vorrichtung (1) zur spektralen Verbreiterung eingekoppelten Laserpulse (2) an eine transversale Eigenmode der Multipass-Zelle (3).

## Claims

1. An apparatus (1) for the spectral broadening of laser pulses (2), comprising:
a plurality of mirror elements (6, 22), on each of which a mirror surface (6b, F, F2, F3, ...) for reflecting the laser pulses (2) is formed, the plurality of mirror elements (6, 22) being fastened to a base body (4a, 4, 23),
and
at least one preferably sheet-like, in particular disc-shaped nonlinear optical solid-state medium (10) and/or a gaseous nonlinear optical medium (G) for the passage of the laser pulses (2) for the generation of a nonlinear phase (Φ_{NL}) by self-phase modulation.

2. The apparatus according to claim 1, wherein a nonlinear optical solid-state medium (10) is fastened to a surface (6a) of at least one mirror element (6) on which the mirror surface (6b) is formed.

3. The apparatus according to claim 1 or 2, further comprising:
a plurality of further mirror elements (7) with further mirror surfaces (7b), the plurality of further mirror elements (7) being fastened to a further base body (4b),
wherein the base body (4a) and the further base body (4b) are arranged at a predetermined distance (L) from one another to form a multipass cell (3), wherein, in particular, a nonlinear optical solid-state medium (10) is fastened to a surface (7a) of at least one of the further mirror elements (7) on which the further mirror surface (6b) is formed.

4. The apparatus according to claim 2 or 3, wherein at least three nonlinear optical solid-state media (10) are arranged in a beam path (W) of the laser pulses (2) in the apparatus (1), with the lengths of sections of the beam path (W) between in each case two adjacent nonlinear optical solid-state media (10) in the beam path (W) being different from one another, the lengths of the sections of the beam path (W) between in each case two adjacent nonlinear optical solid-state media (10) in the beam path (W) preferably reducing with increasing length of the beam path (W) of the laser pulses (2) in the apparatus (1).

5. The apparatus according to any one of claims 2 to 4, wherein at least two nonlinear optical solid-state media (10) are fastened to at least one surface (6a) of at least one mirror element (6) and/or to at least one surface (7a) of at least one further mirror element (7), the thickness (d) of said nonlinear optical solid-state media differing from one another, with the thickness (d) of the nonlinear optical solid-state media (10) preferably increasing with increasing length of the beam path (W) of the laser pulses (2) in the apparatus (1).

6. The apparatus according to any one of the preceding claims, wherein the mirror surface (6b) of at least one mirror element (6) is formed by a reflective coating on a side of the respective nonlinear optical solid-state medium (10) that faces the mirror element (6) and/or wherein the further mirror surface (7b) of at least one further mirror element (7) is formed by a reflective coating on a side of the respective sheet-like nonlinear optical solid-state medium (10) that faces the further mirror element (7).

7. The apparatus according to any one of the preceding claims, wherein at least one mirror surface (6b) and/or at least one further mirror surface (7b) are/is concavely curved, and with the nonlinear optical solid-state medium (10) preferably being concavely curved.

8. The apparatus according to any one of the preceding claims, wherein the plurality of mirror surfaces (6b) and the plurality of further mirror surfaces (7b) are each located on a common spherical surface (11a, 11b).

9. The apparatus according to claim 8 or 9, wherein the plurality of mirror surfaces (6b) and the plurality of further mirror surfaces (7b) have a radius of curvature between 1 m and 15 m, or wherein the plurality of mirror surfaces (6b) and the plurality of further mirror surfaces (7b) have a radius of curvature (R) of less than 1000 m and of more than 10 m.

10. The apparatus according to any one of the preceding claims, wherein the plurality of mirror elements (22) form a deflection device (20), wherein the preferably planar mirror surfaces (F, F2, F3, ...) of the plurality of mirror elements (22) are aligned such that the laser pulses (2) are deflected from a respective mirror surface (F3, F5, ...) to another mirror surface (F4, F6, ...) via the disc-shaped nonlinear optical solid-state medium (10) or via an exposed, preferably concavely curved mirror surface (10a) of a rear mirror (21), with the deflection device (20) and the disc-shaped nonlinear optical solid-state medium (10) or the exposed mirror surface (10a) being arranged at a predetermined distance (L) from one another for the purposes of forming a multipass cell (3).

11. The apparatus according to any one of claims 3 to 10, further comprising: a housing (13) in which the multipass cell (3) is arranged, wherein the nonlinear gaseous medium (G) is preferably introduced into the housing (13) and is, in particular, selected from the group comprising: noble gases, nitrogen, and gas mixtures.

12. The apparatus according to claim 10 or 11, wherein the disc-shaped nonlinear solid-state medium (10) has a mirror surface (10a) which is preferably concavely curved, and/or wherein the mirror elements (22) are arranged on the base body (23) in at least one, and preferably a plurality of, circular rings (R1, R2, R3).

13. The apparatus according to any one of claims 10 to 12, wherein, in order to generate an impact position (P') of the laser pulses (2) offset from a centre (Z) on the disc-shaped nonlinear optical solid-state medium (10), at least two of the mirror elements (22), between which the laser pulses (2) are deflected to the disc-shaped nonlinear optical solid-state medium (10) and back, are arranged at different radial distances (D7, D8) from a central axis (26) of the base body (23), and/or wherein the deflection device (20) is configured to deflect the laser pulses (2), between two successive deflections to the nonlinear optical solid-state medium (10) or the exposed mirror surface (10a) of the rear mirror (21), between at least two preferably adjacent mirror surfaces (F2, F3; F4, F5, ...).

14. The apparatus according to any one of claims 10 to 13, wherein the deflection device (20) has at least one further mirror element (28) with a curved mirror surface (F'), wherein the laser pulses (2) are deflected from a first of the plurality of mirror elements (22) to the further mirror element (28) and from the further mirror element (28) to a second of the plurality of mirror elements (22), wherein in particular a further, preferably sheet-like, nonlinear optical solid-state medium (10') is fastened to a surface (28a) of the further mirror element (28).

15. The apparatus according to any one of claims 10 to 14, wherein a respective mirror element (22) has a preferably planar mirror surface (F, F2, F3, ...) which is aligned to reflect the laser pulses (2) from the nonlinear optical solid-state medium (10) or from the exposed mirror surface (10a) of the rear mirror (21) directly back to the nonlinear optical solid-state medium (10) or to the exposed mirror surface (10a) of the rear mirror (21), and/or wherein a distance (L) between the base body (23) and the disc-shaped nonlinear optical solid-state medium (10) or the exposed mirror surface (10a) of the rear mirror (21) is less than 1.5 m, preferably less than 1.0 m.

16. The apparatus according to any one of the preceding claims, wherein the mirror elements (6, 22) are securely connected to the base body (4a, 23) via a respective connecting portion (15) and/or wherein the further mirror elements (7) are securely connected to the further base body (4b) via a respective connecting portion (15), with recesses (17) preferably being formed in the base body (4a, 23) and/or in the further base body (4b), which recesses each have a lateral surface (18) for establishing a connection with the connecting portion (15) of a respective mirror element (4a, 22) or of a further mirror element (7).

17. An optical system (30), comprising:
a beam source (31) for generating laser pulses (2),
an apparatus (1) for the spectral broadening of the laser pulses (2) according to any one of the preceding claims, and
an apparatus (33) for the temporal compression of the spectrally broadened laser pulses (2').

18. The optical system according to claim 26, further comprising:
an adjustment device (34) for setting an in particular circular polarisation state of the laser pulses (2) input coupled into the apparatus (1) for the spectral broadening of the laser pulses (2), and/or further comprising:
a mode adaptation device (32) for adapting a beam caustic of the laser pulses (2) input coupled into the apparatus (1) for the spectral broadening to a transverse eigenmode of the multipass cell (3).

## Revendications

1. Dispositif (1) d'élargissement spectral d'impulsions laser (2), comprenant :
une pluralité d'éléments miroirs (6, 22), sur lesquels respectivement une surface miroir (6b, F, F2, F3, ...) est formée pour réfléchir les impulsions laser (2), dans lequel la pluralité d'éléments miroirs (6, 22) est fixée à un corps de base (4a, 4, 23), ainsi
qu'au moins un milieu solide (10) optique non linéaire, de préférence en forme de plaque, en particulier en forme de disque, et/ou un milieu gazeux (G) optique non linéaire pour le passage des impulsions laser (2) pour la génération d'une phase non linéaire (Φ_{NL}) par automodulation de phase.

2. Dispositif selon la revendication 1, selon lequel un milieu solide (10) optique non linéaire est fixé à une surface (6a) d'au moins un élément miroir (6) sur laquelle la surface miroir (6b) est formée.

3. Dispositif selon la revendication 1 ou 2, comprenant en outre :
une pluralité d'autres éléments miroirs (7) comportant d'autres surfaces miroir (7b), dans lequel la pluralité d'autres éléments miroirs (7) est fixée à un autre corps de base (4b),
dans lequel le corps de base (4a) et l'autre corps de base (4b) sont agencés à une distance (L) prédéterminée l'un de l'autre pour former une cellule à passage multiple (3), dans lequel en particulier un milieu solide (10) optique non linéaire est fixé à une surface (7a) d'au moins un des autres éléments miroirs (7) sur lequel l'autre surface miroir (6b) est formée.

4. Dispositif selon la revendication 2 ou 3, selon lequel au moins trois milieux solides (10) optiques non linéaires sont agencés dans un trajet de faisceau (W) des impulsions laser (2) dans le dispositif (1), dans lequel les longueurs de sections du trajet de faisceau (W) entre respectivement deux milieux solides (10) optiques non linéaires adjacents dans le trajet de faisceau (W) sont de tailles différentes, dans lequel, de préférence les longueurs des sections du trajet de faisceau (W) entre respectivement deux milieux solides (10) optiques non linéaires adjacents dans le trajet de faisceau (W) diminuent avec l'augmentation de la longueur du trajet de faisceau (W) des impulsions laser (2) dans le dispositif (1).

5. Dispositif selon l'une quelconque des revendications 2 à 4, selon lequel au moins deux milieux solides (10) optiques non linéaires sont fixés à au moins une surface (6a) d'au moins un élément miroir (6) et/ou à au moins une surface (7a) d'au moins un autre élément miroir (7), milieux solides dont les épaisseurs (d) sont de tailles différentes, dans lequel, de préférence les épaisseurs (d) des milieux solides (10) optiques non linéaires augmentent avec l'augmentation de la longueur du trajet de faisceau (W) des impulsions laser (2) dans le dispositif (1).

6. Dispositif selon l'une quelconque des revendications précédentes, selon lequel la surface miroir (6b) d'au moins un élément miroir (6) est formée par un revêtement réfléchissant sur une face du milieu solide (10) optique non linéaire respectif faisant face à l'élément miroir (6) et/ou selon lequel l'autre surface miroir (7b) d'au moins un autre élément miroir (7) est formée par un revêtement réfléchissant sur une face du milieu solide (10) optique non linéaire en forme de plaque respectif faisant face à l'autre élément miroir (7).

7. Dispositif selon l'une quelconque des revendications précédentes, selon lequel au moins une surface miroir (6b) et/ou au moins une autre surface miroir (7b) sont courbées de manière concave, et dans lequel, de préférence le milieu solide (10) optique non linéaire est courbé de manière concave.

8. Dispositif selon l'une quelconque des revendications précédentes, selon lequel la pluralité de surfaces miroir (6b) et la pluralité d'autres surfaces miroir (7b) reposent respectivement sur une surface sphérique (11a, 11b) commune.

9. Dispositif selon la revendication 8 ou 9, selon lequel la pluralité de surfaces miroir (6b) et la pluralité d'autres surfaces miroir (7b) présentent un rayon de courbure compris entre 1 m et 15 m, ou selon lequel la pluralité de surfaces miroir (6b) et la pluralité d'autres surfaces miroir (7b) présentent un rayon de courbure (R) inférieur à 1 000 m et supérieur à 10 m.

10. Dispositif selon l'une quelconque des revendications précédentes, selon lequel la pluralité d'éléments miroirs (22) forment un appareil de déviation (20), selon lequel les surfaces miroir (F, F2, F3, ...), de préférence planes, de la pluralité d'éléments miroirs (22) sont alignées de telle sorte que les impulsions laser (2) sont déviées de la surface miroir (F3, F5, ...) respective par l'intermédiaire du milieu solide (10) optique non linéaire en forme de disque ou par l'intermédiaire d'une surface miroir (10a) exposée, de préférence courbée de manière concave, d'un miroir d'extrémité (21), vers une autre surface miroir (F4, F6, ...), dans lequel l'appareil de déviation (20) et le milieu solide (10) optique non linéaire en forme de disque ou la surface miroir (10a) exposée sont agencés à une distance (L) prédéterminée l'un de l'autre pour former une cellule à passage multiple (3).

11. Dispositif selon l'une quelconque des revendications 3 à 10, comprenant en outre : un boîtier (13) dans lequel est agencée la cellule à passage multiple (3), dans lequel le milieu gazeux (G) non linéaire est, de préférence introduit dans le boîtier (13) et est, en particulier choisi parmi le groupe comprenant : des gaz rares, de l'azote et des mélanges gazeux.

12. Dispositif selon la revendication 10 ou 11, dans lequel le milieu solide (10) non linéaire en forme de disque présente une surface miroir (10a), de préférence courbée de manière concave, et/ou selon lequel les éléments miroir (22) sont agencés sur le corps de base (23) dans au moins un, de préférence plusieurs anneaux circulaires (R1, R2, R3).

13. Dispositif selon l'une quelconque des revendications 10 à 12, selon lequel, pour la génération d'une position d'impact (P') des impulsions laser (2), décalée par rapport à un centre (Z), sur le milieu solide (10) optique non linéaire en forme de disque, au moins deux des éléments miroirs (22), entre lesquels les impulsions laser (2) sont déviées vers le milieu solide (10) optique non linéaire en forme de disque et en retour, sont agencés à différentes distances (D7, D8) radiales d'un axe central (26) du corps de base (23), et/ou selon lequel l'appareil de déviation (20) est conçu pour dévier les impulsions laser (2) entre au moins deux surfaces miroir (F2, F3 ; F4, F5, ...), de préférence adjacentes, entre deux déviations successives vers le milieu solide (10) optique non linéaire ou la surface de miroir (10a) exposée du miroir d'extrémité (21).

14. Dispositif selon l'une quelconque des revendications 10 à 13, selon lequel l'appareil de déviation (20) présente au moins un autre élément miroir (28) comportant une surface miroir (F') courbée, dans lequel les impulsions laser (2) sont déviées d'un premier élément miroir parmi la pluralité d'éléments miroirs (22) vers un autre élément miroir (28) et de l'autre élément miroir (28) vers un deuxième élément miroir parmi la pluralité d'éléments miroirs (22), dans lequel, en particulier un autre milieu solide (10') optique non linéaire, de préférence en forme de plaque, est fixé à une surface (28a) de l'autre élément miroir (28).

15. Dispositif selon l'une quelconque des revendications 10 à 14, selon lequel un élément miroir (22) respectif présente une surface miroir (F, F2, F3, ...), de préférence plane, laquelle est alignée pour réfléchir les impulsions laser (2) depuis le milieu solide (10) optique non linéaire ou depuis la surface miroir (10a) exposée du miroir d'extrémité (21) directement vers le milieu solide (10) optique non linéaire ou vers la surface miroir (10a) exposée du miroir d'extrémité (21), et/ou selon lequel une distance (L) entre le corps de base (23) et le milieu solide (10) optique non linéaire en forme de disque ou la surface miroir (10a) exposée du miroir d'extrémité (21) est inférieure à 1,5 m, de préférence inférieure à 1,0 m.

16. Dispositif selon l'une quelconque des revendications précédentes, selon lequel les éléments miroirs (6, 22) sont fermement reliés au corps de base (4a, 23) par l'intermédiaire d'une section de liaison (15) respective et/ou selon lequel les autres éléments miroirs (7) sont fermement reliés à l'autre corps de base (4b) par l'intermédiaire d'une section de liaison (15) respective, dans lequel, de préférence des cavités (17) sont formées dans le corps de base (4a, 23) et/ou dans l'autre corps de base (4b), lesquelles présentent respectivement une surface latérale (18) pour la liaison avec la section de liaison (15) d'un élément miroir (4a, 22) respectif ou d'un autre élément miroir (7).

17. Système optique (30), comprenant :
une source de faisceau (31) de génération d'impulsions laser (2),
un dispositif (1) d'élargissement spectral des impulsions laser (2) selon l'une quelconque des revendications précédentes, ainsi
qu'un dispositif (33) de compression temporelle des impulsions laser (2') à spectre élargi.

18. Système optique selon la revendication 26, comprenant en outre :
un appareil de réglage (34) de réglage d'un état de polarisation circulaire particulier des impulsions laser (2) couplées au dispositif (1) d'élargissement spectral des impulsions laser (2), et/ou comprenant en outre :
un appareil d'adaptation de mode (32) pour l'adaptation d'une caustique de faisceau des impulsions laser (2) couplées dans le dispositif (1) d'élargissement spectral à un mode propre transversal de la cellule à passage multiple (3).
